# EUROPEAN PATENT APPLICATION

(11) **EP 1 919 219 A1**
(43) Date of publication of application: **07.05.2008**
(21) Application number: 06780929.3
(22) Date of filing: 10.07.2006
(51) Int. Cl.: H04N 7/18, G06T 1/00, H04N 5/262, H04N 5/66

(54) **VIDEO TRANSMITTING APPARATUS, VIDEO DISPLAY APPARATUS, VIDEO TRANSMITTING METHOD AND VIDEO DISPLAY METHOD**

(30) Priority: 11.07.2005 JP 2005201449
(71) Applicant: Sharp Kabushiki Kaisha, Osaka-shi, Osaka 545-8522 (JP)
(72) Inventor: YAMAMOTO, Kenichiroh, Chiba-shi, Chiba 266-0005 (JP); IWANAMI, Takuya, Chiba-shi, Chiba 266-0011 (JP); MUKAI, Toshiroh, Yachiyo-shi, Chiba 276-0044 (JP)
(74) Representative: Müller - Hoffmann & Partner
(86) International application number: PCT/JP2006/313707
(87) International publication number: WO 2007/007727

(57) **Abstract**

During reproduction of received wide-field video data by use of a receiving side apparatus, whatever may be the type, size, resolution and orientation of a receiving side display apparatus, the video information is converted, based on information transmitted together with the video information, such that the video information is suitable for the reproducing side display apparatus, thereby achieving a faithful display. A wide-field video generating/displaying system has a virtual video display system comprising one or more display apparatus (114) and also has a real video display system comprising one or more display apparatuses (105-107) that display the video information. A transmitting side apparatus generates one or more pieces of video information and virtual video display system information based on the shape, size, resolution and orientation information of the display apparatus (114), while the receiving side apparatus performs, based on the received virtual video display system information, a conversion of the video information such that the video information is suitable for the display apparatuses (105-107), thereby displaying the video information on the video display apparatuses (105-107).

## Description

### TECHNICAL FIELD

The present invention relates to a wide-field video displaying system that receives video information transmitted from a video generation side on a video display side to display a wide-field video.

### BACKGROUND OF THE INVENTION

In accordance with the study of Hatada, et al. (non-patent document 1), as shown in Fig. 1, the human visual field is classified into a discriminative visual field 101, an effective visual field 102, an induced visual field 103, and an auxiliary visual field 104 by the roles of the visual functions. The discriminative field 101 is a range capable of precisely accepting high-density information such as graphical discrimination. The effective field 102 is a range capable of accepting natural information only with eye movement although the discrimination ability is lower than the discriminative field 101. The induced field 103 is a range having an influence when determining the overall outside world information although only having a recognizing ability to the extent of recognizing the presence of stimuli and performing simple discrimination. The auxiliary field 104 is a range only capable of discriminating the presence of stimuli.

Current high-definition television sets are designed such that a video is presented to a rage covering the effective field 102 among the above fields (this video is referred to as an effective field video in the present invention). That is, no video is presented to the induced field 103 and the auxiliary field 104. It is expected that a sense of presence is enhanced by presenting a video to the induced field and the auxiliary field (the video presented to the induced field and the auxiliary field is referred to as a peripheral video in the present invention).

It is conceived that the peripheral video is achieved by utilizing a video having resolution equivalent to the effective field video, a video having reduced resolution, or lighting as an ultralow resolution video. For example, in the disclosure of patent document 1, with regard to controlling lighting in a viewing space having a viewer in conjunction with images displayed on a screen of an image display apparatus, an optimum lighting effect is generated by calculating lighting conditions enhancing a sense of presence based on image/audio information sent from broadcast stations to create lighting signals and by outputting the lighting signals in synchronization with the timing of image output.

In the disclosure of patent document 2, with regard to providing a wide viewing angle video using three display apparatuses, a pair of display apparatuses is included along with a center display apparatus such that the display apparatuses oppose to each other on the left/right of the front face of the center display apparatus; the left/right portions of a center video is displayed while gradually deteriorating the horizontal resolution as approaching the wide side of the view angle; and information to be displayed on the left/right display apparatuses is transmitted/received along with the center video information.

In the disclosure of patent document 3, with regard to a display system capable of effectively displaying a wide viewing angle video with the use of a plurality of display apparatuses, when video data represented in a manner surrounding a user are displayed such that the data are divided and displayed among a plurality of display apparatuses arranged around the user, information indicative of positions of the respective display apparatuses is acquired from position sensors disposed on the display apparatuses to generate videos to be seen in the direction of the display apparatuses from the user and the plurality of the display apparatuses is driven to display the generated videos.
Patent Document 1: Japanese Laid-Open Patent Publication No. 2000-173783, "Illumination Control Method and Lighting System"
Patent Document 2: Japanese Laid-Open Patent Publication No. 11-327533, "Three-Dimensional Video Display Device and Three-Dimensional Display Game Device"
Patent Document 3: Japanese Laid-Open Patent Publication No. 2005-99064, "Display System, Display Control Apparatus, Display Apparatus, Display Method and User Interface Device"
Non-Patent Document 1: Toyohiko Hatada, Haruo Sakata, and Hideo Kusaka, "Induced Effect of Direction Sensation and Display Size: Basic Study of Realistic Feeling with Wide Screen Display", The Journal of the Institute of Television Engineers of Japan Vol. 33, No. 5, pp.407-413 (1979)
Non-Patent Document 2: Hirokazu Kato, Mark Billinghurst, Koichi Asano, and Keihachiro Tachibana" An Augmented Reality System and its Calibration based on Marker Tracking", Transactions of the Virtual Reality Society of Japan Vol. 4, No. 4, pp.607-616 (1999)

### DISCLOSURE OF THE INVENTION

### PROBLEM TO BE SOLVED BY THE INVENTION

Above wide-field videos are created by broadcast stations and content producers, i.e., video producers, for example. The wide-field videos are transmitted to and reproduced by reproducers such as general households through broadcasting or a packaged medium.

When video producers produce wide-field videos, if a displaying system (video presenting system) for reproducing the wide-field videos is not determined, the producers create wide-field videos incompatible with each other and problems occur at the time of reproduction. It is contemplated that reproducers may have different types, sizes, resolutions, and arrangements of display apparatuses for presenting the effective field video and the peripheral video. Therefore, if the same wide-field video data are received, although one video presenting system can correctly reproduce the data, another video presenting system cannot correctly reproduce the data. It is also problematic how to support changes in the video presenting system due to rearrangement of a room, for example.

Although a wide-field video is transmitted/received on the basis of a video presenting system consisting of three flat screens with image resolutions reduced in left/right screens as compared to a center screen in the disclosure of patent document 2, since the types, sizes, resolutions, and arrangements are different in display apparatuses for presenting the effective field video and the peripheral video depending on viewing environments of respective viewers as above, it is problematic that the wide-field video intended by the producer cannot correctly be reproduced by video presenting systems other than the video presenting system consisting of the three flat screens.

Although position sensors are disposed on respective display apparatuses to send information indicative of positions of each display apparatus to a display controlling apparatus and the display controlling apparatus analyzes the information to generate image information to be displayed by the respective display apparatuses in the disclosure of patent document 3, since information is not transmitted with regard to a video presenting system used when producing the wide-field video, it cannot be known what video presenting system is assumed to display the wide-field video when the producer produces the wide-field video, and therefore, it is problematic that the wide-field video intended by the producer cannot correctly be reproduced.

The present invention was conceived to solve the above problems and it is therefore the object of the present invention to provide a video transmitting apparatus, a video display apparatus, a video transmitting method, and a video display method capable of correctly reproducing wide-field videos intended by producers regardless of a video presenting system.

### MEANS FOR SOLVING THE PROBLEMS

The present invention solves the above problems with the following technical means.
A first invention of the present application is a video transmitting apparatus transmitting video information generated to be displayed on one or more display screens making up a virtual viewing environment, comprising a means that adds and transmits virtual video presenting system information related to positions of pixels included in the display screens making up the virtual viewing environment along with the video information.

A second invention of the present application is the video transmitting apparatus as defined in the first invention, wherein the positions of the pixels included in the display screens making up the virtual viewing environment are relative positions to a viewpoint of a viewer in the virtual viewing environment space.

A third invention of the present application is the video transmitting apparatus as defined in the first or second invention, wherein the virtual video presenting system information includes information about the sizes of the pixels of the display screens making up the virtual viewing environment.

A fourth invention of the present application is the video transmitting apparatus as defined in any one of the first to third inventions, wherein the virtual video presenting system information includes information representing the shapes of the display screens making up the virtual viewing environment.

A fifth invention of the present application is the video transmitting apparatus as defined in any one of the first to fourth inventions, wherein the virtual video presenting system information includes information representing the disposed positions and directions of the display screens making up the virtual viewing environment.

A sixth invention of the present application is the video transmitting apparatus as defined in any one of the first to fifth inventions, wherein the virtual video presenting system information includes information representing the sizes and the numbers of pixels of the display screens making up the virtual viewing environment.

A seventh invention of the present application is the video transmitting apparatus as defined in any one of the first to sixth inventions, wherein the video information is generated with the use of videos taken by one or more cameras.

An eighth invention of the present application is the video transmitting apparatus as defined in any one of the first to sixth inventions, wherein the video information is generated with the use of computer-synthesized videos.

A ninth invention of the present application is the video transmitting apparatus as defined in any one of the first to eighth inventions, wherein the video information is transmitted through broadcasting.

A tenth invention of the present application is the video transmitting apparatus as defined in any one of the first to eighth inventions, wherein the video information is transmitted through a network.

An eleventh invention of the present application is a video transmitting method of transmitting video information generated to be displayed on one or more display screens making up a virtual viewing environment, the method comprising the step of adding and transmitting virtual video presenting system information related to positions of pixels included in the display screens making up the virtual viewing environment along with the video information.

A twelfth invention of the present application is a video display apparatus receiving video information generated to be displayed on one or more display screens in a virtual viewing environment to display the video information on one or more display screens in a real viewing environment, comprising a means that acquires virtual video presenting system information related to positions of pixels included in the display screens in the virtual viewing environment, and a means that uses the acquired virtual video presenting system information and real video presenting system information related to positions of pixels included in the display screens in the real viewing environment information to generate video information displayed on the pixels included in the display screens in the real viewing environment information from the received video information.

A thirteenth invention of the present application is the video display apparatus as defined in the twelfth invention, wherein the positions of the pixels included in the display screens making up the virtual viewing environment are relative positions to a viewpoint of a viewer in the virtual viewing environment space.

A fourteenth invention of the present application is the video display apparatus as defined in the twelfth or thirteenth invention, wherein the real video presenting system information includes information representing a viewpoint of a viewer in the real viewing environment space.

A fifteenth invention of the present application is the video display apparatus as defined in any one of the twelfth to fourteenth inventions, wherein the virtual video presenting system information includes information about the sizes of the pixels of the display screens making up the virtual viewing environment.

A sixteenth invention of the present application is the video display apparatus as defined in the fifteenth invention, wherein the real video presenting system information includes information about the sizes of the pixels of the display screens making up the real viewing environment.

A seventeenth invention of the present application is the video display apparatus as defined in any one of the twelfth to sixteenth inventions, wherein the virtual video presenting system information includes information representing the shapes of the display screens making up the virtual viewing environment.

An eighteenth invention of the present application is the video display apparatus as defined in the seventeenth invention, wherein the real video presenting system information includes information representing the shapes of the display screens making up the real viewing environment.

A nineteenth invention of the present application is the video display apparatus as defined in any one of the twelfth to eighteenth inventions, wherein the virtual video presenting system information includes information representing the disposed positions and directions of the display screens making up the virtual viewing environment.

A twentieth invention of the present application is the video display apparatus as defined in the nineteenth invention, wherein the real video presenting system information includes information representing the disposed positions and directions of the display screens making up the real viewing environment.

A twenty-first invention of the present application is the video display apparatus as defined in any one of the twelfth to twentieth inventions, wherein the virtual video presenting system information includes information representing the sizes and the numbers of pixels of the display screens making up the virtual viewing environment.

A twenty-second invention of the present application is the video display apparatus as defined in the twenty-first invention, wherein the real video presenting system information includes information representing the sizes and the numbers of pixels of the display screens making up the real viewing environment.

A twenty-third invention of the present application is a video display method of receiving video information generated to be displayed on one or more display screens in a virtual viewing environment to display the video information on one or more display screens in a real viewing environment, the method comprising the steps of acquiring virtual video presenting system information related to positions of pixels included in the display screens in the virtual viewing environment, and using the acquired virtual video presenting system information and real video presenting system information related to positions of pixels included in the display screens in the real viewing environment information to generate video information displayed on the pixels included in the display screens in the real viewing environment information from the received video information.

### EFFECT OF THE INVENTION

According to a video transmitting apparatus of the present invention, since information related to a virtual video presenting system used at the time of production of a wide-field video is added and transmitted along with video information, the video information corresponding to a real video presenting system of a viewer can easily be generated, and a wide-field video adapted to viewing environments of viewers can correctly be reproduced.
According to a video display apparatus of the present invention, information related to a virtual video presenting system used at the time of production of a wide-field video can be used to easily generate the video information corresponding to a real video presenting system of a viewer, and a wide-field video adapted to viewing environments of viewers can correctly be reproduced.

### BRIEF DESCRIPTION OF DRAWINGS

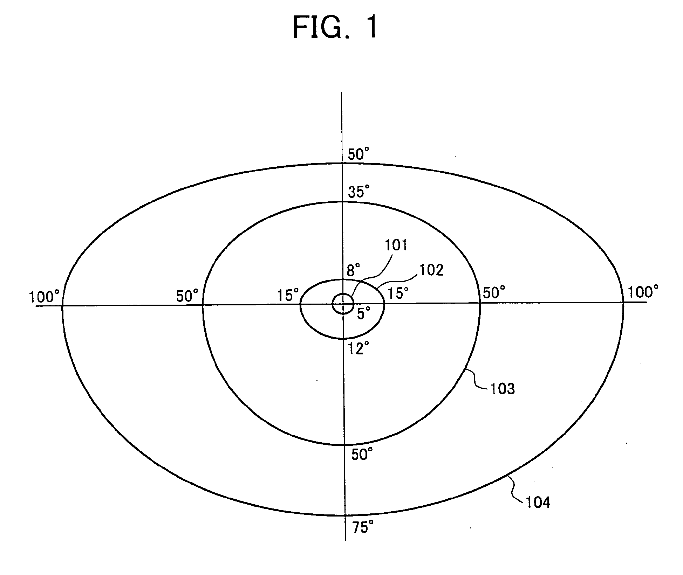

[Fig. 1] Fig. 1 is a view of classification of visual field.
[Fig. 2] Fig. 2 is a view of a video presenting system example 1.
[Fig. 3] Fig. 3 is a plan view of the video presenting system example 1.
[Fig. 4] Fig. 4 is a view of a video presenting system example 2.
[Fig. 5] Fig. 5 is a plan view of the video presenting system example 2.
[Fig. 6] Fig. 6 is a view of a video presenting system example 3.
[Fig. 7] Fig. 7 is a plan view of the video presenting system example 3.
[Fig. 8] Fig. 8 is a view of a video presenting system example 4.
[Fig. 9] Fig. 9 is a plan view of the video presenting system example 4.
[Fig. 10] Fig. 10 is a view of a video presenting system example 5.
[Fig. 11] Fig. 11 is a plan view of the video presenting system example 5.
[Fig. 12] Fig. 12 is a view of a video presenting system example 6.
[Fig. 13] Fig. 13 is a plan view of the video presenting system example 6.
[Fig. 14] Fig. 14 is a block diagram of a transmitting apparatus in a wide-field video transmitting/receiving system of a first embodiment.
[Fig. 15] Fig. 15 is a block diagram of a receiving apparatus in the wide-field video transmitting/receiving system of the first embodiment.
[Fig. 16] Fig. 16 is a view of an example of virtual video presenting system information.
[Fig. 17] Fig. 17 is a view representing the video presenting system examples 1 to 6 with the use of the virtual video presenting system information.
[Fig. 18] Fig. 18 is a view of an example of real video presenting system information.
[Fig. 19] Fig. 19 is a view representing the video presenting system examples 1 to 6 with the use of the real video presenting system information.
[Fig. 20] (A) is a view of a coordinate system in a virtual viewing space and (B) is a view of a coordinate system in a real viewing space.
[Fig. 21] Fig. 21 is a view for explaining a method of a video conversion process.
[Fig. 22] Fig. 22 is a block diagram of a transmitting apparatus in a wide-field video transmitting/receiving system of a second embodiment.
[Fig. 23] Fig. 23 is a block diagram of a receiving apparatus in the wide-field video transmitting/receiving system of the second embodiment.
[Fig. 24] Fig. 24 is a block diagram of a receiving apparatus in a wide-field video transmitting/receiving system of a third embodiment.
[Fig. 25] Fig. 25 is a view of a method of acquiring the real video displaying system information.
[Fig. 26] Fig. 26 is a block diagram of the inside and periphery of a video-display apparatus information detecting portion.
[Fig. 27] Fig. 27 is a block diagram of a transmitting apparatus in a wide-field video transmitting/receiving system of a fourth embodiment.
[Fig. 28] Fig. 28 is a block diagram of a receiving apparatus in the wide-field video transmitting/receiving system of the fourth embodiment.
[Fig. 29] Fig. 29 is a block diagram of a receiving apparatus in a wide-field video transmitting/receiving system of a fifth embodiment.

### EXPLANATIONS OF REFERENCE NUMERALS

101 ... discriminative field; 102...effective field; 103...induced field; 104...auxiliary field; 105 to 107...video display apparatus; 108...viewer; 109 to 113...video display apparatus; 114...video display apparatus; 115...video display apparatus; 116...video display apparatus; 117 to 123...lighting apparatus; 124...viewer' s viewpoint position; 125, 128...straight line; 126, 127, 129, 130...point; 201...camera; 202...wide-field video data generating portion; 203...memory; 204...encoding processing portion; 205...multiplexing processing portion; 206...transmitting portion; 207...video processing apparatus; 208...receiving portion; 209...multiplexed-data isolation processing portion; 210...decoding processing portion; 211...video conversion processing portion; 212...memory; 213...displaying portion; 214...video-display apparatus information detecting portion; 215...camera; 216...displaying-portion information reading portion; 217...displaying-portion internal memory; 218...reference display information generating portion; 219...three-dimensional position calculating portion; 220...receiving portion; 221...video processing apparatus; and 222...transmitting portion.

### BEST MODES FOR CARRYING OUT THE INVENTION

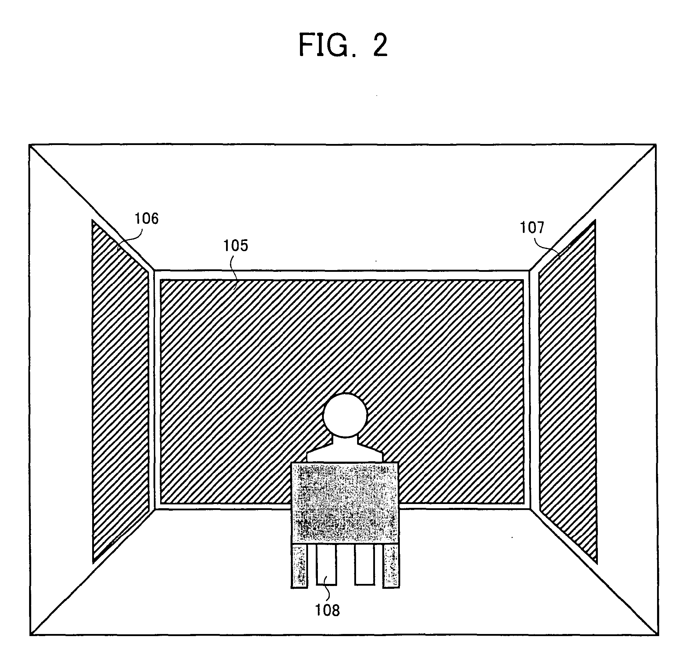

Before describing embodiments of a wide-field video transmitting/receiving system of the present invention, some examples of a wide-field video presenting system used in the embodiments will first be shown with reference to Figs. 2 to 13. Although each system presents wide-field video information such that a visual field of a user is covered, each shape, size, number, arrangement, etc., are different in one or more display screens making up a viewing environment.

### (Video Presenting System Example 1)

Fig. 2 is a view of a wide-field video presenting system example 1. The wide-field video presenting system of Fig. 2 is shown as a room provided with three flat video display apparatuses (video display screens) 105 to 107, which is viewed from the back side. The video display apparatus 105, the video display apparatus 106, and the video display apparatus 107 are disposed in the room as one or more video display apparatuses making up a viewing environment, and a viewer 108 sitting on a chair in the viewing environment space watches these apparatuses. The video display apparatus 105 is disposed on a wall in front of the viewer 108; the video display apparatus 106 is disposed on a wall to the left of the viewer 108; and the video display apparatus 107 is disposed on a wall to the right of the viewer 108. These video display apparatuses are implemented by projection from projectors, for example.

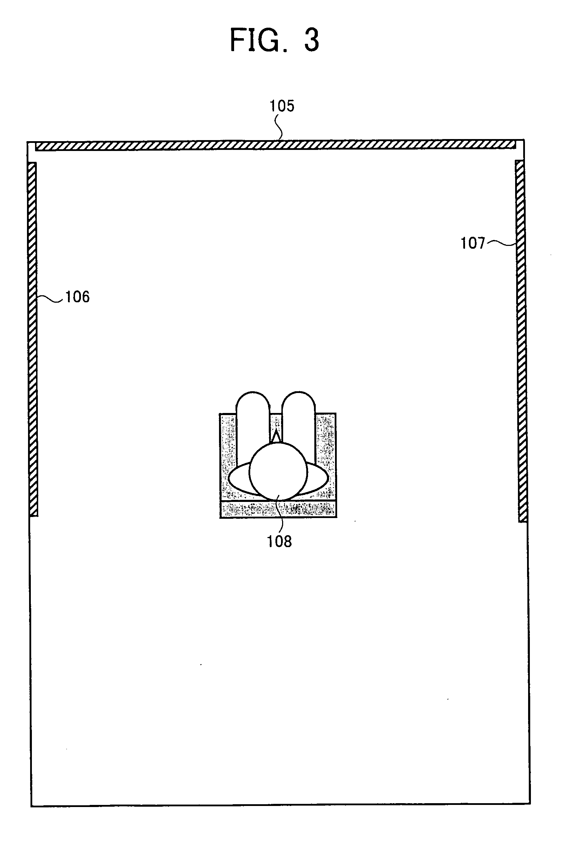

Fig. 3 is a plan view of the wide-field video presenting system example 1 and depicts each of the video display apparatuses 105 to 107 disposed in different positions and directions in the viewing environment space such that the visual field of the viewer 108 is covered. The video display apparatus 105, the video display apparatus 106, and the video display apparatus 107 may be the same apparatuses having a predetermined screen size (size), number of pixels (resolution), etc., or each apparatus may be a different arbitrary apparatus.

### (Video Presenting System Example 2)

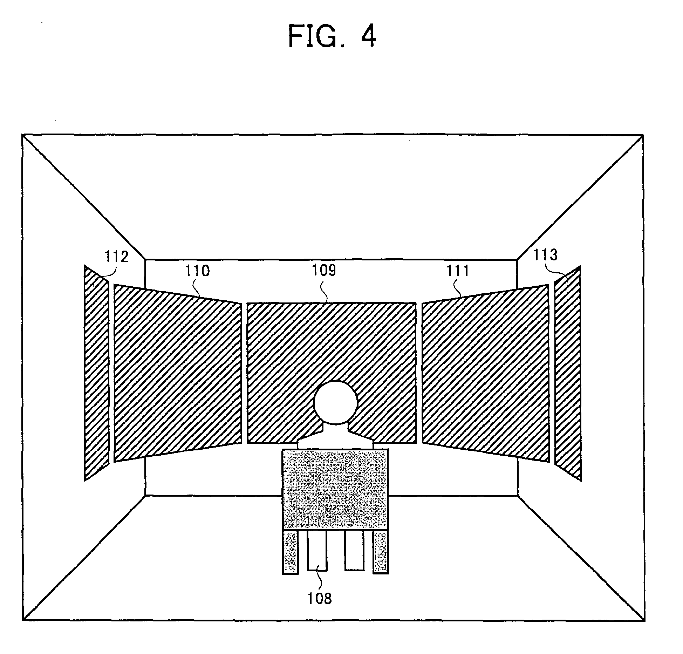

Fig. 4 is a view of a wide-field video presenting system example 2. The wide-field video presenting system of Fig. 4 is shown as a room provided with five flat video display apparatuses (video display screens) 109 to 113, which is viewed from the back side. The video display apparatus 109, the video display apparatus 110, the video display apparatus 111, the video display apparatus 112, and the video display apparatus 113 are disposed in the room as one or more video display apparatuses making up a viewing environment, and the viewer 108 sitting on a chair in the viewing environment space watches these apparatuses. The video display apparatus 109 is disposed on a wall in front of the viewer 108; the video display apparatus 110 is disposed diagonally to the forward left of the viewer 108; the video display apparatus 111 is disposed diagonally to the forward right of the viewer 108; the video display apparatus 112 is disposed on a wall to the left of the viewer 108; and the video display apparatus 113 is disposed on a wall to the right of the viewer 108. These video display apparatuses 109 to 113 are implemented by cathode-ray tube televisions, liquid crystal televisions, plasma televisions, rear-projection televisions, and projection screens from projectors, for example.

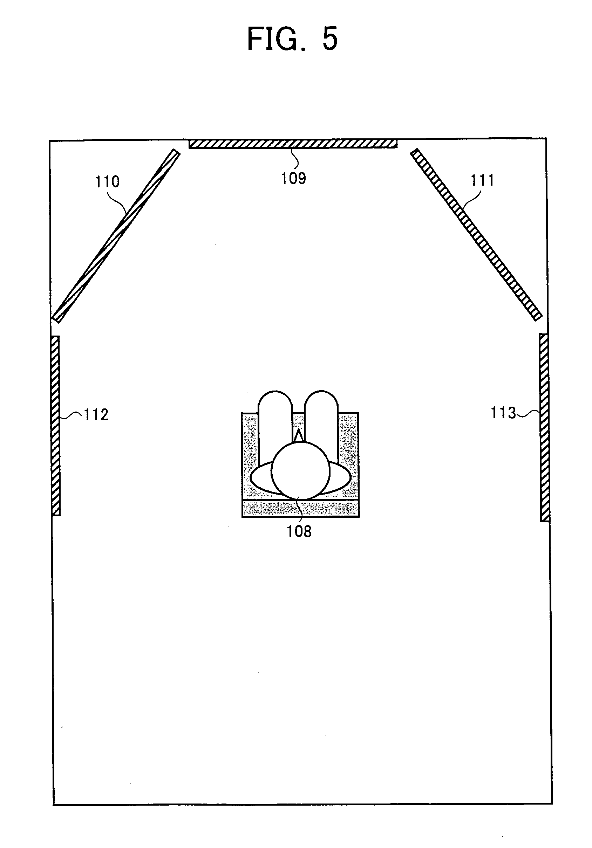

Fig. 5 is a plan view of the wide-field video presenting system example 2 and depicts each of the video display apparatuses 109 to 113 disposed in different positions and directions in the viewing environment space such that the visual field of the viewer 108 is covered. The video display apparatus 109, the video display apparatus 110, the video display apparatus 111, the video display apparatus 112, and the video display apparatus 113 may be the same apparatuses having a predetermined screen size (size), number of pixels (resolution), etc., or each apparatus may be a different arbitrary apparatus.

### (Video Presenting System Example 3)

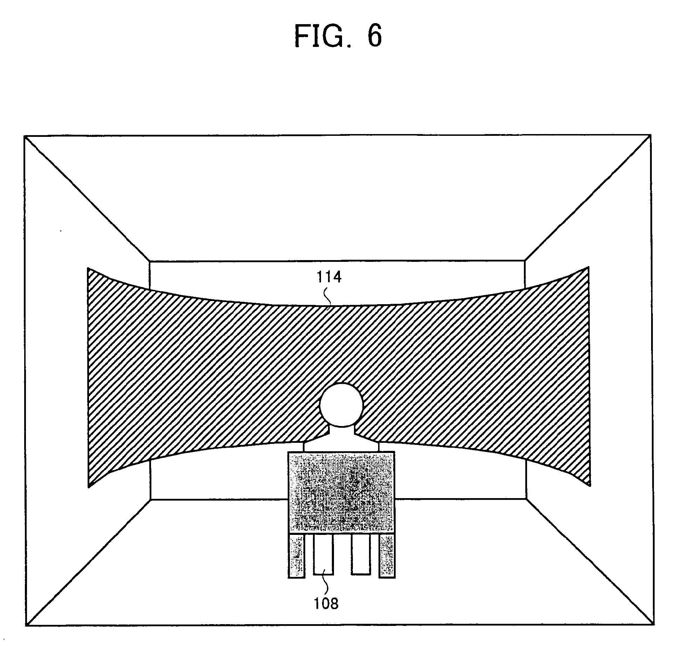

Fig. 6 is a view of a wide-field video presenting system example 3. The wide-field video presenting system of Fig. 6 is shown as a room provided with a video display apparatus (video display screen) 114 using an arch-shaped screen in the shape like a portion cut out from a cylinder, which is viewed from the back side. The video display apparatus 114 is disposed in the room as one or more video display apparatuses making up a viewing environment, and the viewer 108 sitting on a chair in the viewing environment space watches the apparatus. The video display apparatus 114 is implemented by projection from a plurality of projectors, for example.

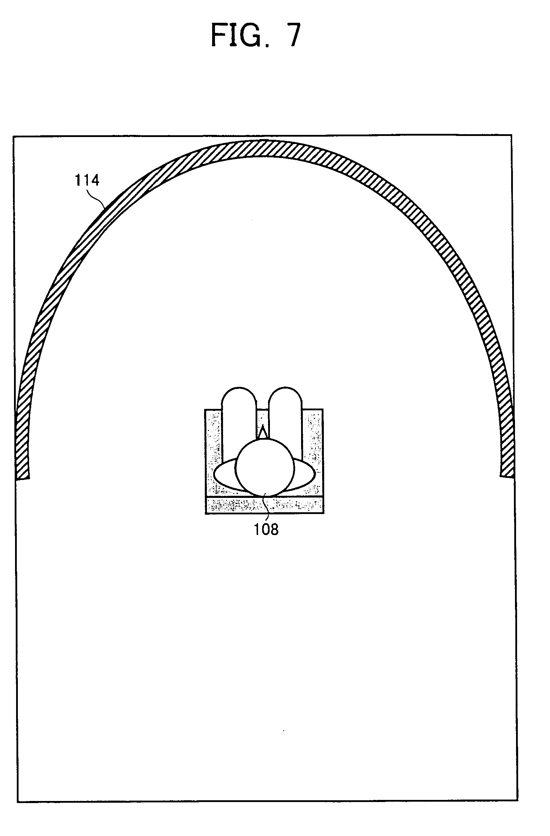

Fig. 7 is a plan view of the wide-field video presenting system example 3 and depicts the video display apparatus 114 using the arch-shaped screen disposed such that the visual field of the viewer 108 is covered. The video display apparatus 114 may have a predetermined or arbitrary screen size (size), number of pixels (resolution), etc.

### (Video Presenting System Example 4)

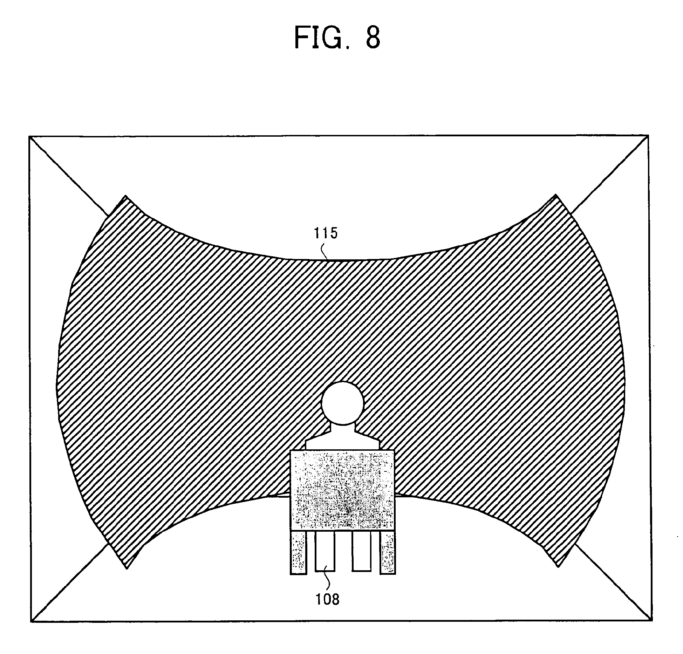

Fig. 8 is a view of a wide-field video presenting system example 4. The wide-field video presenting system of Fig. 8 is shown as a room provided with a video display apparatus (video display screen) 115 using a dome-shaped screen in the shape like a portion cut out from a sphere, which is viewed from the back side. The video display apparatus 115 is disposed in the room as one or more video display apparatuses making up a viewing environment, and the viewer 108 sitting on a chair in the viewing environment space watches the apparatus. The video display apparatus 115 is implemented by projection from a plurality of projectors, for example.

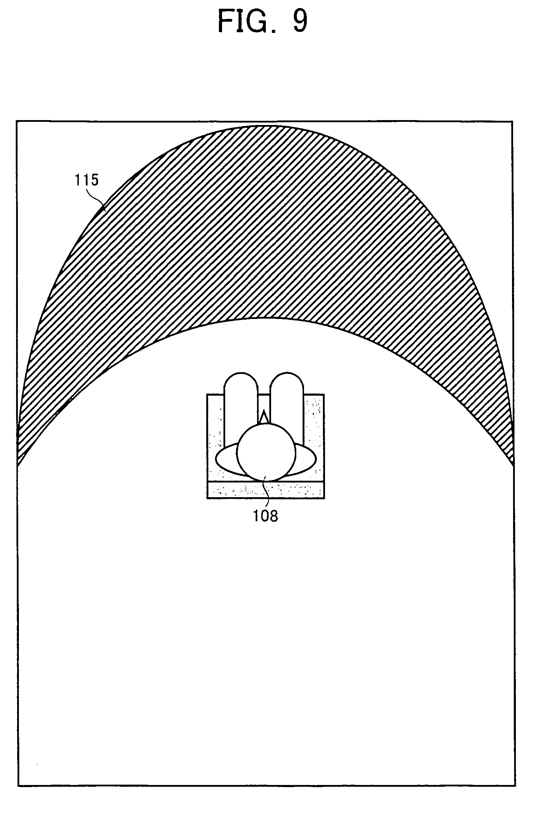

Fig. 9 is a plan view of the wide-field video presenting system example 4 and depicts the video display apparatus 115 using the dome-shaped screen disposed such that the visual field of the viewer 108 is covered. The video display apparatus 115 may have a predetermined or arbitrary screen size (size), number of pixels (resolution), etc.

### (Video Presenting System Example 5)

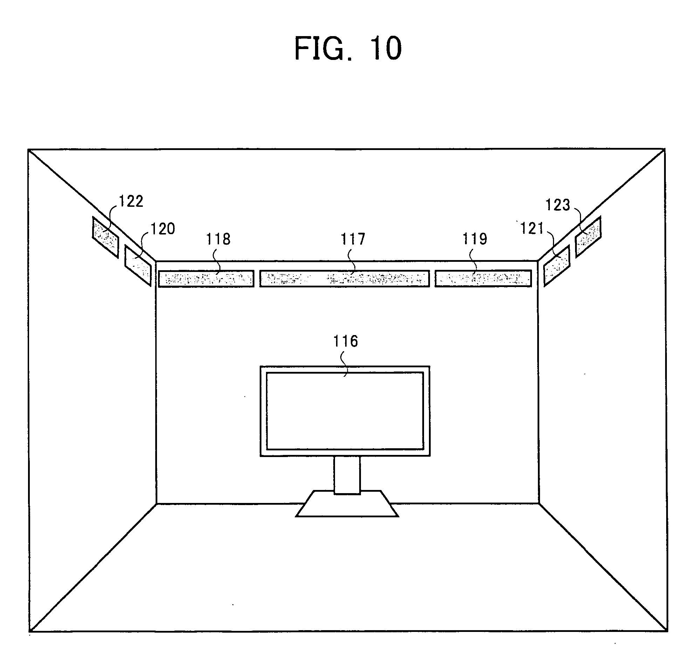

Fig. 10 is a view of a wide-field video presenting system example 5. The wide-field video presenting system of Fig. 10 is shown as a room provided with lighting apparatuses in addition to a flat video display apparatus (video display screen), which is viewed from the back side. A video display apparatus 116, a lighting apparatus 117, a lighting apparatus 118, a lighting apparatus 119, a lighting apparatus 120, a lighting apparatus 121, a lighting apparatus 122, and a lighting apparatus 123 are disposed in the room as one or more video display apparatuses making up a viewing environment. No viewer is shown in Fig. 10. This is because the video display apparatus 116 is hidden by the illustration of the viewer. The video display apparatus 116 is implemented by a cathode-ray tube television, a liquid crystal television, a plasma television, a rear-projection television, and a projection screen from a projector, for example. The lighting apparatuses 117 to 123 are implemented by lighting apparatuses using three color LEDs of R (red), G (green), and B (blue), for example.

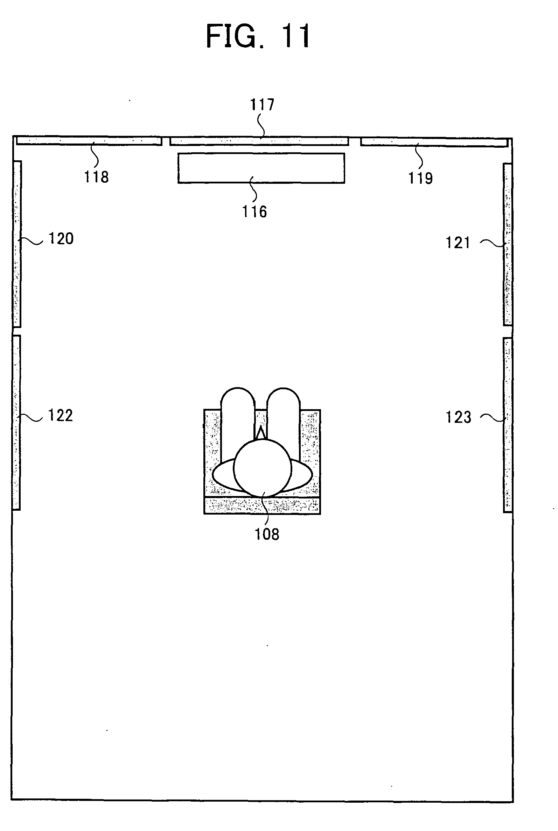

Fig. 11 is a plan view of the wide-field video presenting system example 5 and depicts the video display apparatus 116 disposed in front of the viewer 108 and each of the lighting apparatuses 117 to 123 disposed in different positions and directions in the viewing environment space such that the induced and auxiliary fields of the viewer 108 are covered.

The lighting apparatuses 117 to 123 are used as video display apparatuses (video display screens) having very low resolutions and are controlled in accordance with input video signals. Although the wide-field video presenting system of Figs. 10 and 11 shows an example of arrangement such that walls under the respective lighting apparatuses are illuminated, this is merely an example. Other various lighting apparatuses are conceivable, such as those disposed on the lower side (floor) of the room to illuminate walls above the lighting apparatuses, those illuminating walls around the lighting apparatuses, and the lighting apparatuses emitting light by itself, and any one or combination of these apparatuses may be used. These lighting apparatuses may be various types of lighting apparatuses such as those capable of controlling hue, saturation, and luminance of the illumination light as well as those only capable of changing luminance of the illumination. The lighting apparatuses 117 to 123 may be the same apparatuses having a predetermined size, resolution etc., or each apparatus may be a different arbitrary apparatus.

The video display apparatuses of the present invention are not only the video display apparatus such as liquid crystal televisions but also the lighting apparatuses as above, which are defined as apparatuses capable of displaying with different video resolutions. As described above, the induced and auxiliary fields of the human visual field have lower discrimination abilities and only have recognizing abilities to the extent of recognizing the presence of stimuli and performing simple discrimination. Therefore, it is expected that the effect of enhancing the sense of presence can be acquired in the peripheral portions of the visual field simply by presenting color stimuli through the lighting apparatuses.

### (Video Presenting System Example 6)

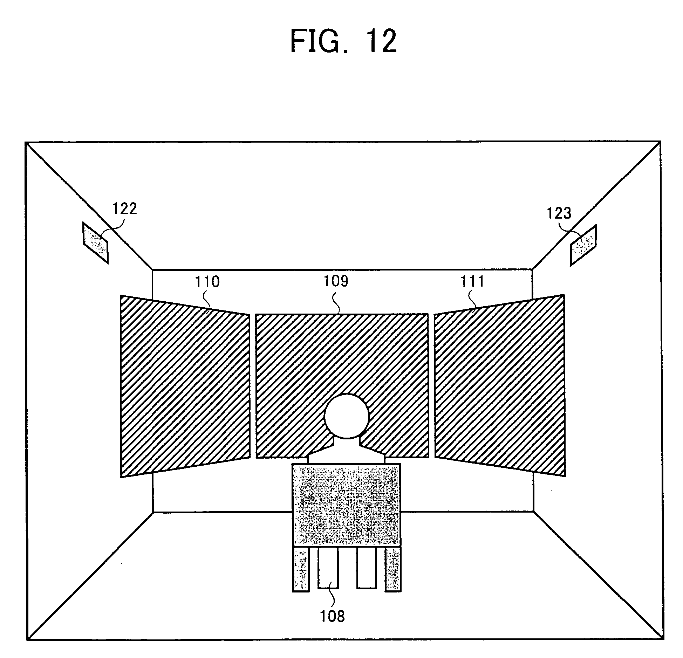

Fig. 12 is a view of a wide-field video presenting system example 6. The wide-field video presenting system of Fig. 12 is shown as the video display apparatus 109, the video display apparatus 110, the video display apparatus 111, the lighting apparatus 122, and the lighting apparatus 123 disposed in the room as one or more video display apparatuses making up a viewing environment, which are watched by the viewer 108 sitting on a chair in the viewing environment space. This configuration is a combination of the video presenting system example 2 shown in Figs. 4 and 5 and the video presenting system example 5 shown in Figs. 10 and 11. The video display apparatus 109 is disposed on a wall in front of the viewer 108; the video display apparatus 110 is disposed diagonally to the forward left of the viewer 108; the video display apparatus 111 is disposed diagonally to the forward right of the viewer 108; the lighting apparatus 122 is disposed on a wall to the left of the viewer 108; and the lighting apparatus 123 is disposed on a wall to the right of the viewer 108.

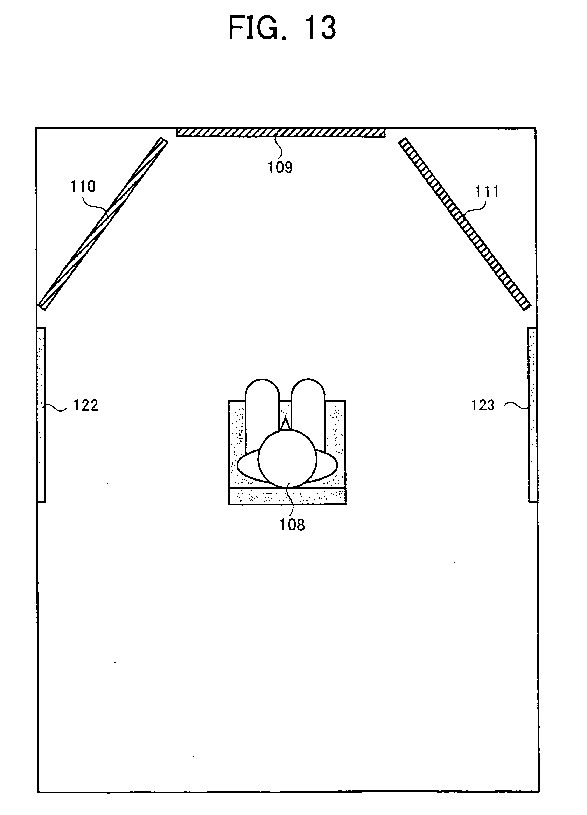

Fig. 13 is a plan view of the wide-field video presenting system example 6 and depicts the video display apparatuses 109 to 111 disposed in front of and to the left/right of the viewer 108 and the lighting apparatuses 122 and 123 disposed in the peripheral portions of the visual field of the viewer 108. This is a combination of the video presenting system example 2 shown in Figs. 4 and 5 and the video presenting system example 5 shown in Figs. 10 and 11. The video display apparatuses and the lighting apparatuses may be mixed as above.

As described above, systems collectively called the wide-field video presenting system may specifically be combinations of the video display apparatuses and the lighting apparatuses of various types, shapes, resolutions, disposed positions, and directions. Therefore, the problem is that what wide-field video presenting system is the premise of creating a wide-field video or that how the wide-field video created on the premise of a certain wide-field video presenting system is converted and properly displayed in accordance with other wide-field video presenting systems. The above six video presenting systems are merely examples and it is needless to say that other various video presenting systems are conceivable.

Description will hereinafter be made of a wide-field video transmitting/receiving system capable of transmitting wide-field video information produced using any one of the above plurality of video presenting systems as a virtual viewing environment and capable of converting and correctly reproducing the wide-field video information in accordance with a real viewing environment in detail as the embodiments of the present invention.

### (First Embodiment)

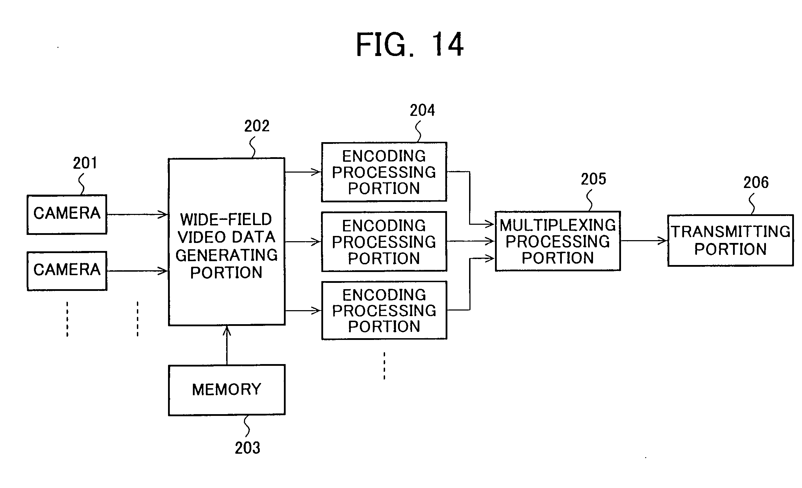

A wide-field video transmitting/receiving system according to a first embodiment of the present invention will be described with reference to Figs. 14 to 16.
Fig. 14 is a block diagram of a transmitting apparatus in the wide-field video transmitting/receiving system of this embodiment. The transmitting apparatus in the wide-field video transmitting/receiving system of this embodiment generates a plurality of pieces of video information to be output to each of one or more video display apparatuses making up any one of the above wide-field video presenting systems with a wide-field video data generating portion 202 based on video information taken by one or more cameras 201.

To generate a plurality of pieces of the video information, shapes, sizes, resolutions, disposed positions, directions, etc., must be comprehended with regard to one or more display screens making up the video presenting system of the video output destination (on the viewer side). However, these cannot be comprehended on the broadcast station side (video transmission side). Therefore, the wide-field video data generating portion 202 assumes a video presenting system making up a certain virtual viewing environment and generates a plurality of pieces of video information on the premise of the virtual video presenting system. The information representing the virtual video presenting system, i.e., types, shapes, sizes, resolutions, disposed positions, directions etc., of the display screens making up the virtual viewing environment is referred to as virtual video presenting system information in this description.

The virtual video presenting system information is information enabling the identification of positions and sizes of pixels included in the display screen making up the virtual viewing environment as described later, and is not limited to certain information as long as information for directly or indirectly representing the pixel positions and sizes is included.
The virtual video presenting system information is recorded in a memory 203 and the wide-field video data generating portion 202 processes video information taken by the one or more cameras 201 and generates one or more pieces of the video information (wide-field video information) in accordance with a virtual video presenting system based on the virtual video presenting system information recorded on the memory 203.

The one or more pieces of the video information is compressed by an encoding processing portion 204 to form one or more video streams. A multiplexing processing portion 205 multiplexes the one or more video streams to form one multiplexed stream. The transmitting portion 206 causes the multiplexed stream data to be carried by airwaves.

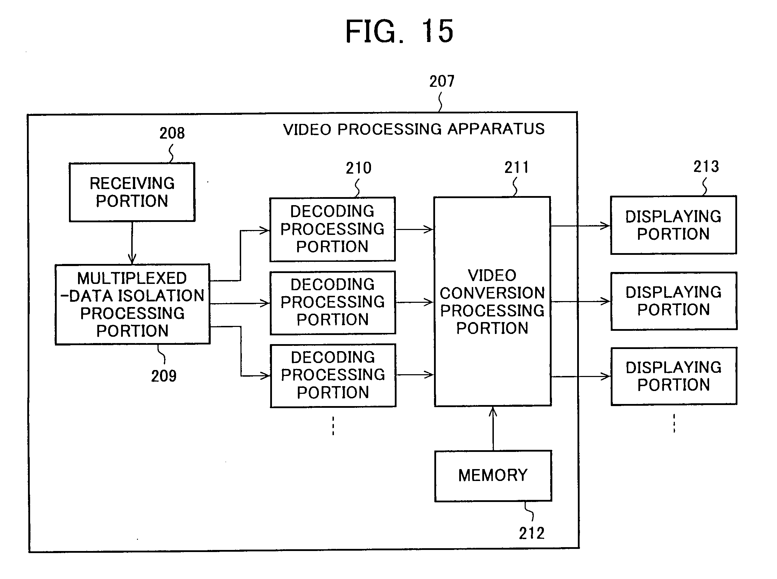

Fig. 15 is a block diagram of a receiving apparatus in the wide-field video transmitting/receiving system of the first embodiment of the present invention. Within a video processing apparatus 207 of the receiving apparatus in the wide-field video transmitting/receiving system of this embodiment, the airwaves are first received by a receiving portion 208 to take out the multiplexed stream data. The multiplexed stream data are isolated into respective video streams by a multiplexed-data isolation processing portion 209. These video streams are compressed data and therefore expanded by a decoding processing portion 210.

Discussions will be made here on the viewing environment on the video receiving side (viewer side), i.e., the shapes, sizes, resolutions, disposed positions, and directions of the one or more display screens in the wide-field video presenting system actually disposed on the receiving side. The information representing the real video presenting system on the viewer side, i.e., the types, shapes, sizes, resolutions, disposed positions, directions, etc., of the display screens making up the real viewing environment is referred to as real video presenting system information in this description.

If the real video presenting system is equivalent to the virtual video presenting system, the video data expanded by the decoding processing portion 210 may directly be output to displaying portions 213. For example, this applies to the case when the virtual video presenting system is that shown in Figs. 2 and 3 and the real video presenting system also is that shown in Figs. 2 and 3 or when the virtual video presenting system is that shown in Figs. 12 and 13 and the real video presenting system also is that shown in Figs. 12 and 13.

However, if the real video presenting system is different from the virtual video presenting system, the video data expanded by the decoding processing portion 210 cannot directly be output. For example, this applies to the case when the virtual video presenting system is that shown in Figs. 2 and 3 and the real video presenting system is that shown in Figs. 4 and 5 or when the virtual video presenting system is that shown in Figs. 8 and 9 and the real video presenting system is that shown in Figs. 12 and 13.

In such a case, a conversion process must be executed such that the video data generated in accordance with the virtual video presenting system information are adapted to the real video presenting system. This conversion process is executed by a video conversion processing portion 211. A memory 212 has the virtual video presenting system information and the real video presenting system information recorded thereon. After the video conversion processing portion 211 uses both pieces of the information to execute the conversion process of the video data, the data are output to the displaying portions 213.

The above virtual video presenting system information and the real video presenting system information will hereinafter be described in detail.

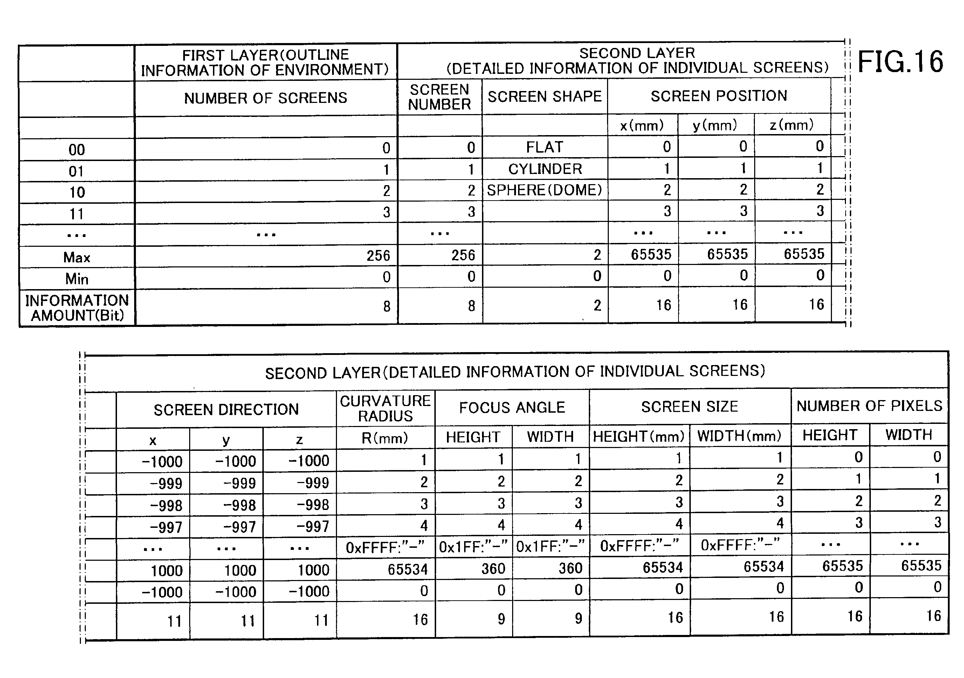

Fig. 16 shows an example of the virtual video presenting system information. The virtual video presenting system information can be divided into a first layer (outline information of the viewing environment) and a second layer (detailed information of individual screens). The first layer (outline information of the viewing environment) includes "number of screens" information and has description of information for identifying how many screens make up the virtual video presenting system.

The second layer (detailed information of individual screens) includes information of "screen number", "screen shape", "screen position", "screen direction", "curvature radius", "focus angle", "screen size", and "number of pixels", and these pieces of information can be combined to obtain the three-dimensional positions and sizes of the pixels included in the display screens making up the virtual video presenting system.

The "screen number" information is information for identifying the display screens in the virtual video presenting system and identification numbers are added to the respective display screens. The "screen shape" information is information representing the shape types of the display screens in the virtual video presenting system and describes the shape types such as flat, cylinder, and sphere (dome) in this case. The "screen position" information is information representing the disposed positions of the screens in the virtual video presenting system and describes three-dimensional coordinates of the center positions of the display screens. The "screen direction" information is information representing the disposed directions of the screens in the virtual video presenting system and describes vectors, etc., indicating directions of video output from the viewpoint of the centers of display screens.

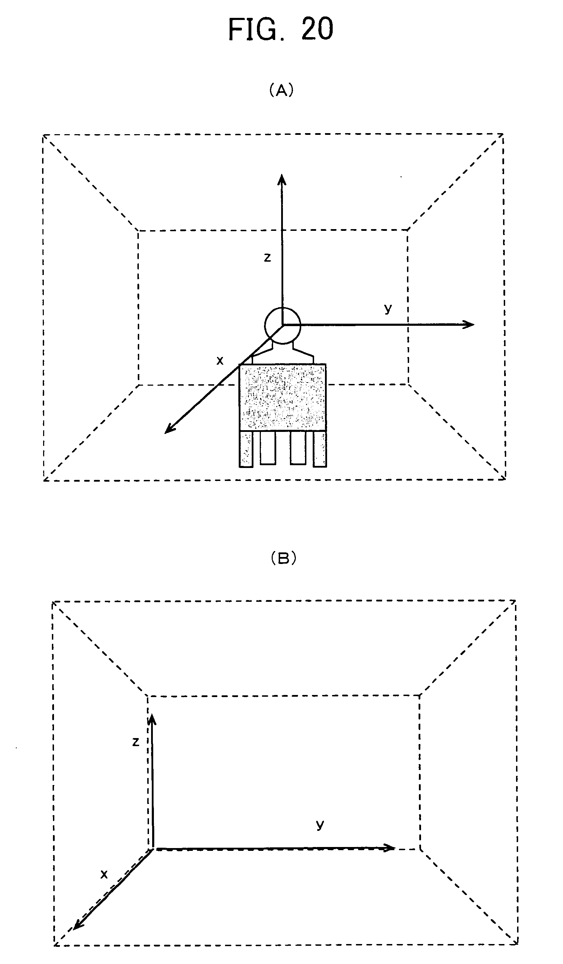

In this virtual video presenting system information, as shown in Fig. 20(A), it is assumed that a viewpoint position of an observer in the virtual viewing space is defined as the original point to use a coordination system having the x-axis on the back side of the observer.

The "screen size" information describes lengths (dimensions) in the vertical and horizontal directions of the display screens when the shape of the display screens in the virtual video presenting system is flat. The "number of pixels" information is information representing the numbers of pixels of the display screens in the virtual video presenting system and describes the numbers of pixels in the vertical and horizontal directions of the display screen. The resolutions of the display screens and the sizes of the pixels are known from the "screen size" information and the "number of pixels" information.

If the shape of the display screens in the virtual video presenting system is curved, the "curvature radius" information and the "focus angle" information are included as effective parameters. The "curvature radius" information is information representing the shapes of the curved display screens in the virtual video presenting system, and the curve degrees of the curving lines of the display screens are described with the curvature radiuses. The "focus angle" information is information representing the sizes of the curved display screens in the virtual video presenting system, and the sizes of the screens viewed from the focal points of the display screens are described with the focus angles.

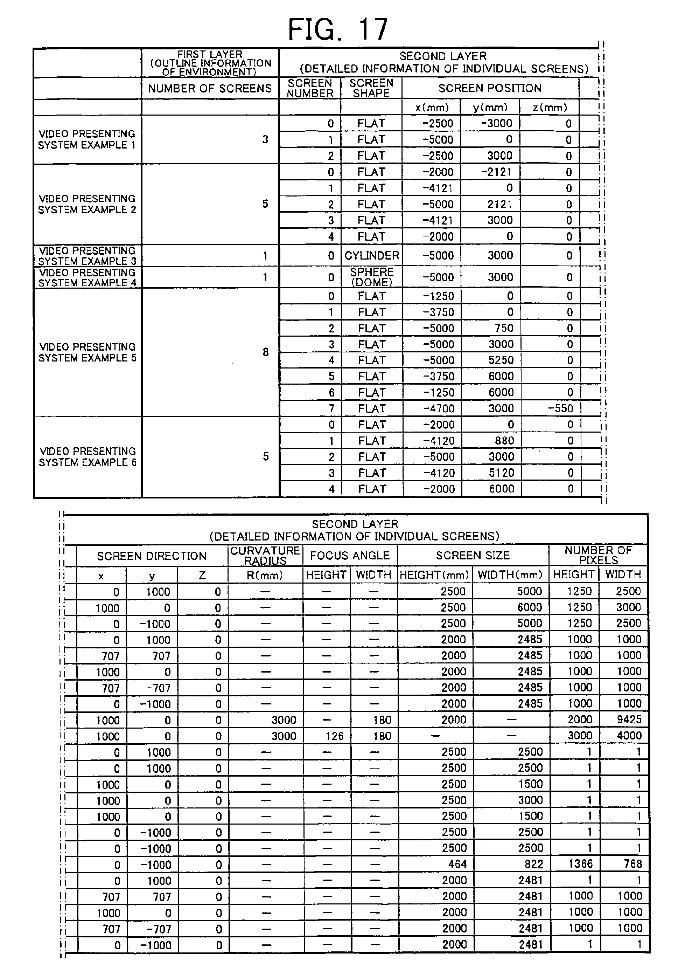

Fig. 17 shows a table representing the above video presenting system examples 1 to 6 with the use of the above virtual video presenting system information as an example. The information of the "number of screens" and the "screen shape" is described with values in accordance with the above video presenting system examples 1 to 6. To the information of the "screen number", the "screen position", the "screen direction", the "curvature radius", the "focus angle", the "screen size", and the "number of pixels", specific values are given as an example. The "screen direction" information is described as values of vectors of 1000 mm in length.

Since the video presenting system example 1 consists of the three flat video display apparatuses (video display screens) 105 to 107, the "number of screens" is three. The information of the "screen number" 0, the "screen number" 1, and the "screen number" 2 corresponds to the video display apparatus 106, the video display apparatus 106, and the video display apparatus 107, respectively. Since all the display apparatuses are flat, no information exists for the "curvature radius" and the "focus angle", and the sizes of the screens are described with the "screen size" information. The case of 2 mm in height and 2 mm in width is taken as an example of the size of one pixel of the video display apparatuses, and this can be obtained from the information of the "screen size" and the "number of pixels".

Since the video presenting system example 2 consists of the five flat video display apparatuses (video display screens) 109 to 113, the "number of screens" is five. The information of the "screen number" 0, the "screen number" 1, the "screen number" 2, the "screen number" 3, and the "screen number" 4 corresponds to the video display apparatus 112, the video display apparatus 110, the video display apparatus 109, the video display apparatus 111, and the video display apparatus 113, respectively. Since all the display apparatuses are flat, no information exists for the "curvature radius" and the "focus angle", and the sizes of the screens are described with the "screen size" information. The case of 2 mm in height and 2.5 mm in width is taken as an example of the size of one pixel of the video display apparatuses, and this can be obtained from the information of the "screen size" and the "number of pixels".

Since the video presenting system example 3 consists of the one video display apparatus (video display screen) 114 using the arch-shaped screen in the shape like a portion cut out from a cylinder, the "number of screens" is one. The information of the "screen number" 0 corresponds to the video display apparatus 114. Since the video display apparatus 114 is in the cylindrical shape, the "screen shape" information is "cylinder". The screen size in the horizontal direction is described with the use of information of the "curvature radius" and the "focus angle", and the screen size in the vertical direction is described with the use of the "screen size" information. The case of 1 mm in height and 1 mm in width is taken as an example of the size of one pixel of the video display apparatus 114, and this can be obtained from the information of the "curvature radius", the "focus angle", the "screen size", and the "number of pixels".

Since the video presenting system example 4 consists of the one video display apparatus (video display screen) 115 using the dome-shaped screen in the shape like a portion cut out from a sphere, the "number of screens" is one. The information of the "screen number" 0 corresponds to the video display apparatus 115. Since the video display apparatus 115 is in the spherical shape, the "screen shape" information is "sphere". The screen sizes in the horizontal and vertical directions are described with the use of information of the "curvature radius" and the "focus angle". The case of 3000 pixels in height and 4000 pixels in width is taken as an example of the "number of pixels" information. If the vertical and horizontal numbers of pixels are specified as above on a sphere, the pixel size is varied depending on the site on the screen.

Since the video presenting system example 5 consists of the one flat video display apparatus (video display screen) 116 and the seven lighting apparatuses 117 to 123, the "number of screens" is eight. The information of the "screen number" 0, the "screen number" 1, the "screen number" 2, the "screen number" 3, the "screen number" 4, the "screen number" 5, the "screen number" 6, and the "screen number" 7 corresponds to the lighting apparatus 122, the lighting apparatus 120, the lighting apparatus 118, the lighting apparatus 117, the lighting apparatus 119, the lighting apparatus 121, the lighting apparatus 123, and the video display apparatus 116, respectively. Since all the video display apparatuses are flat and the areas illuminated by the lighting apparatuses are also flat, no information exists for the "curvature radius" and the "focus angle", and the sizes of the screens are described with the "screen size" information. The information of the "screen size" and the "number of pixels" is described on the assumption that the video display apparatus 116 is a 37-inch size television and that the number of pixels is 1366 pixels in width and 768 pixels in height. The lighting apparatuses 117 to 123 are defined as a video display apparatus having only one pixel; the "screen size" information is described as the sizes of areas illuminated by the lighting; and the "number of pixels" information is described as one pixel in height and one pixel in width.

Since the video presenting system example 6 consists of the three flat video display apparatuses (video display screens) 109 to 111 and the two lighting apparatuses 122 and 123, the "number of screens" is five. The information of the "screen number" 0, the "screen number" 1, the "screen number" 2, the "screen number" 3, and the "screen number" 4 corresponds to the lighting apparatus 122, the video display apparatus 110, the video display apparatus 109, the video display apparatus 111, and the lighting apparatus 123, respectively. Since all the video display apparatuses are flat and the areas illuminated by the lighting apparatuses are also flat, no information exists for the "curvature radius" and the "focus angle", and the sizes of the screens are described with the "screen size" information. The case of 2 mm in height and 2.5 mm in width is taken as an example of the size of one pixel of the video display apparatuses 109 to 111, and this can be obtained from the information of the "screen size" and the "number of pixels". The lighting apparatuses 122 and 123 are defined as a video display apparatus having only one pixel; the "screen size" information is described as the sizes of areas illuminated by the lighting; and the "number of pixels" information is described as one pixel in height and one pixel in width.
As described above, the video presenting systems can be described with the use of the virtual video presenting system information.

As described above, the virtual video presenting system information is information necessary for identifying three-dimensional positions in the viewing environment space and sizes of the pixels included in the display screens making up the virtual video presenting system and, of course, may be information other than above. For example, it is apparent that the three-dimensional position information of the pixels included in the display screens making up the virtual video presenting system may directly be transmitted or that the display screens making up the virtual video presenting system may be approximated by a three-dimensional function to obtain the three-dimensional positions of the pixels. It is needless to say that no information is necessary for identifying the size of the pixels in such a case that the size of the pixels is standardized and determined in advance.

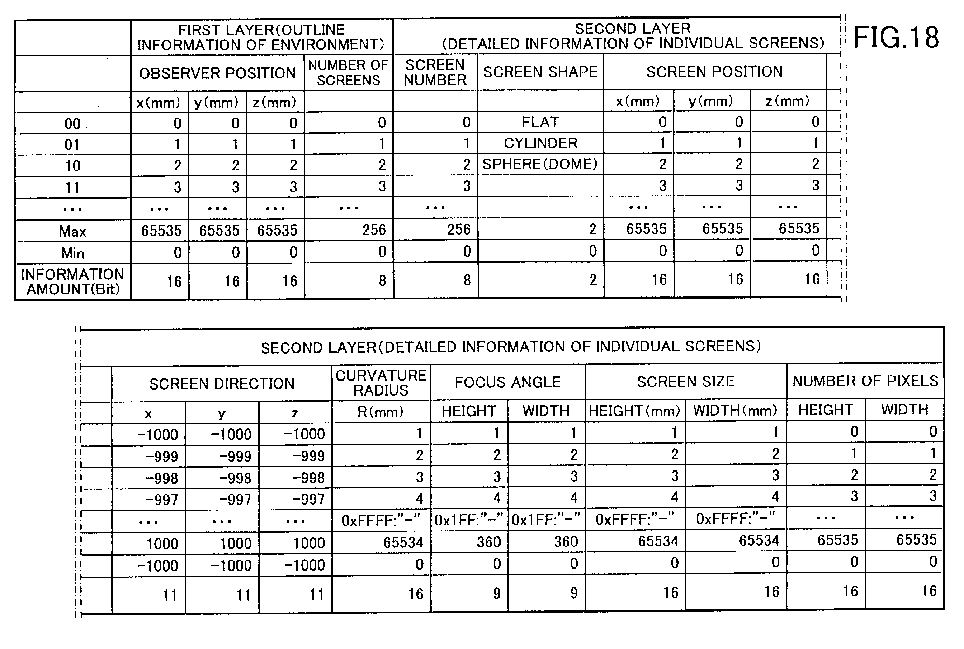

Fig. 18 shows the real video presenting system information. The real video presenting system information can also be divided into the first layer (outline information of the viewing environment) and the second layer (detailed information of individual screens) as is the case with the above virtual video presenting system information. The first layer (outline information of the viewing environment) includes "observer position" information and "number of screens" information. The "observer position" information is information representing the position of the actual observer and describes three-dimensional coordinates of the observer in the viewing environment space. Coordinates may be specified for a position where the observer is likely to exist such as a position of a chair in a room, or the position of the observer may be sensed with the use of a camera, etc., to reflect the information to the "observer position information" as needed. The "number of screens" information has description of information for identifying how many screens make up the real video presenting system.

In this real video presenting system information, as shown in Fig. 20(B), it is assumed that the lower left corner in the real viewing space (room) is defined as the original point (of course, the original point may be another point) to use a coordination system having the x-axis on the back side of the observer.

The second layer (detailed information of individual screens) includes information of "screen number", "screen shape", "screen position", "screen direction", "curvature radius", "focus angle", "screen size", and "number of pixels", and these pieces of information can be combined to obtain the three-dimensional positions and sizes of the pixels included in the display screens making up the real video presenting system.

The "screen number" information is information for identifying the display screens in the real video presenting system and identification numbers are added to the respective display screens. The "screen shape" information is information representing the shape types of the display screens in the real video presenting system and describes the shape types such as flat, cylinder, and sphere (dome) in this case. The "screen position" information is information representing the disposed positions of the screens in the real video presenting system and describes three-dimensional coordinates of the center positions of the display screens. The "screen direction" information is information representing the disposed directions of the screens in the real video presenting system and describes vectors, etc., indicating directions of video output from the viewpoint of the centers of display screens.

The "screen size" information describes lengths (dimensions) in the vertical and horizontal directions of the display screens when the shape of the display screens in the real video presenting system is flat. The "number of pixels" information is information representing the numbers of pixels of the display screen in the real video presenting system and describes the numbers of pixels in the vertical and horizontal directions of the display screen. The resolutions of the display screens and the sizes of the pixels are known from the "screen size" information and the "number of pixels" information.

If the shape of the display screens in the real video presenting system is curved, the "curvature radius" information and the "focus angle" information are included as effective parameters. The "curvature radius" information is information representing the shapes of the curved display screens in the real video presenting system, and the curve degrees of the curving lines of the display screens are described with the curvature radiuses. The "focus angle" information is information representing the sizes of the curved display screens in the real video presenting system, and the sizes of the screens viewed from the focal points of the display screens are described with the focus angles.

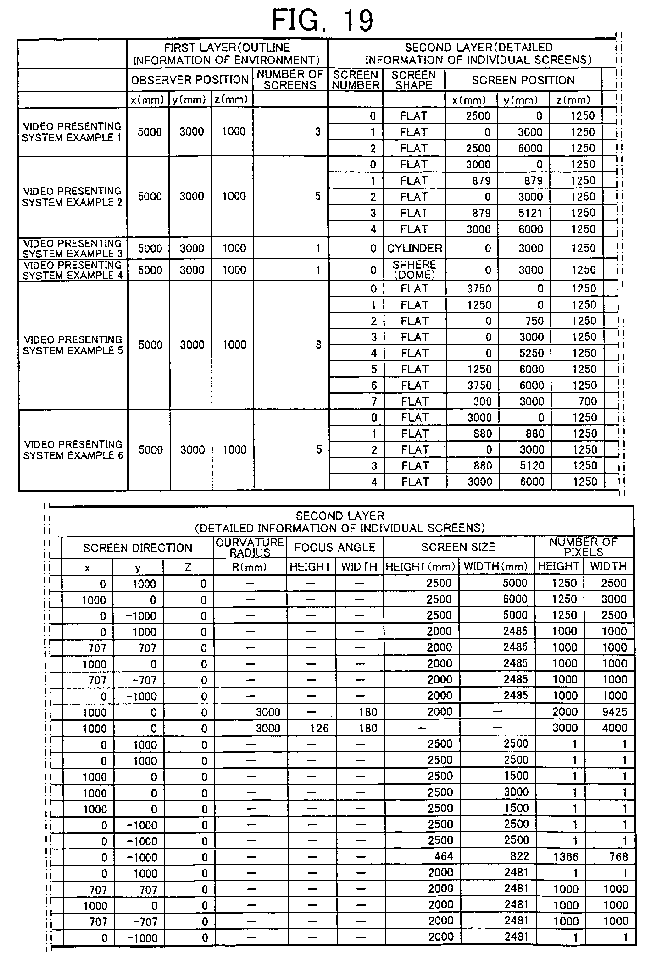

Fig. 19 shows a table representing the above video presenting system examples 1 to 6 with the use of the above real video presenting system information as an example. The "observer position" information is described with a position of the eye when the observer sits on a chair at the center of the exemplary video presenting systems as an example. The information of the "number of screens" and the "screen shape" is described with values in accordance with the above video presenting system examples 1 to 6. To the information of the "screen number", the "screen position", the "screen direction", the "curvature radius", the "focus angle", the "screen size", and the "number of pixels", specific values are given as an example. The "screen direction" information is described as values of vectors of 1000 mm in length.
Details of description related to the video presenting system examples will not herein be described since the details are the same as the example of Fig. 17 for the items other than the "observer position" information.

As described above, the real video presenting system information is information necessary for identifying three-dimensional positions in the viewing environment space and sizes of the pixels included in the display screens making up the real video presenting system and, of course, may be information other than above. For example, it is apparent that the three-dimensional position information of the pixels included in the display screens making up the real video presenting system may directly be transmitted/received or that the display screens making up the real video presenting system may be approximated by a three-dimensional function to obtain the three-dimensional positions of the pixels by transmitting/receiving the three-dimensional function. It is needless to say that no information is necessary for identifying the size of the pixels in such a case that the size of the pixels is standardized and determined in advance.

By defining a plurality of representative models (e.g., the above real video presenting system examples 1 to 6) having predetermined three-dimensional positions in the viewing environment space and sizes of the pixels included in the display screens making up the real video presenting system, the information identifying the representative models may be used as the real video presenting system information.
Although the "observer position" information is included in the real video presenting system information as above since the positions of videos presented in the real video presenting system are varied depending on the position of the observer in this embodiment, the "observer position" information is unnecessary if the positions of videos presented in the real video presenting system are held constant regardless of the position of the observer.

An example of a converting method in the video conversion processing portion 211 will hereinafter be described. As described above, the video data generated on the premise of the virtual video presenting system must be converted and displayed such that the data are adapted to the real video presenting system, and the video conversion processing portion 211 executes a process of displaying the video data on the real display screens such that the video data look the same as those displayed on the virtual display screen. Specifically, the optimum pixel values displayed at the pixels of the display screens making up the real video presenting system are obtained from pixel values of the pixels of the display screens making up the virtual video presenting system.

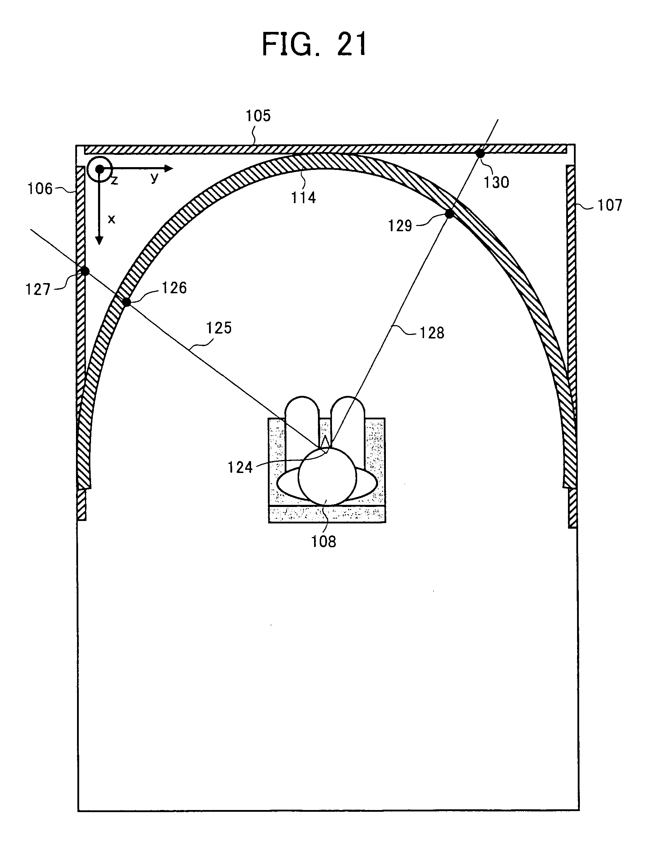

An example of a specific method of the video conversion process will be described with reference to Fig. 21.
In Fig. 21, the wide-field video presenting system example 1 shown in Figs. 2 and 3 is depicted and overlapped with the wide-field video presenting system example 3 shown in Figs. 6 and 7. In this example, the wide-field video presenting system example 3 is the virtual video presenting system and the wide-field video presenting system example 1 is the real video presenting system. The video display apparatus 114 is a virtual display apparatus (display screen) of the wide-field video presenting system example 3, and the video display apparatus 105, the video display apparatus 106, and the video display apparatus 107 are actual display apparatuses (display screens) of the wide-field video presenting system example 1.

A pixel value to be displayed at a pixel 127 on the video display apparatus 106 (hereinafter, a real screen) making up the real video presenting system can be obtained from a pixel value of a pixel 126 on the video display apparatus 114 (hereinafter, a virtual screen) making up the virtual video presenting system.

First, the observer 108 and the virtual screen 114 represented on the coordinate system of the virtual video presenting system are converted to representation on the coordinate system of the real video presenting system. This is achieved by rotation and parallel translation between the coordinate systems. If the observer has moved, the movement can be reflected by changing the relative positional relationship.

The coordinate positions of the pixels are then acquired on the virtual screen and the real screen. Since the three-dimensional position information of the pixels of the display screen can be represented by a function when the size, shape, location, pixel arrangement method, and number of pixels of the display screen is known, if the pixel 127 is a pixel located at a horizontal position h1 and a vertical position v1 on the real screen 106, the position coordinates can be represented by (fx(h1,v1), fy(h1,v1), fz(h1,v1)). If position coordinates of a viewpoint 124 of the viewer 108 is (xv, yv, zv), a function of a straight line linking the pixel 127 and the viewpoint 124 can be obtained from both points (fx(h1,v1), fy(h1,v1), fz(h1,v1)) and (xv, yv, zv), and this straight line is defined as a straight line 125.

Since the three-dimensional position information of the pixels on the virtual screen 114 can also be represented by a function, the position coordinates of an intersection point 126 can be calculated by solving the equation of the straight line 125 substituted for this function, and the pixel value at the intersection point 126 on the virtual screen 114 may be used as the pixel value at the pixel 127 on the real screen 106.

If the intersection point 126 does not coincide with a pixel on the virtual screen 114, a pixel value of the point closest to the intersection point 126 may be used, or a value may be interpolated from pixel values of three adjacent points or interpolated from pixel values of four adjacent points. Alternatively, the pixel value may be interpolated from more pixel values to determine the pixel value to be displayed at the pixel 127 on the real screen 106, and other methods may be used to determine the pixel value to be displayed at the pixel 127 on the real screen 106.

If no intersection point exists between the straight line 125 and the virtual screen 114, the pixel value may be set to zero (black pixel) or to the same color as a back wall, or the pixel value on the virtual screen 114 closest to the straight line 125 may be brought on. Other methods may be used to determine the pixel value to be displayed at the pixel 127 on the real screen 106.
The same process as above can be executed for other points (pixels) on the real screen 106 to determine the pixel values on the real screen 106 with the use of the pixel values on the virtual screen 114. The pixel values to be displayed on the real screens can be determined for the pixels on the real screen 105 and the real screen 107 by the same method as above with the use of the pixel values on the virtual screen 114. By executing such a process, the conversion process can be executed from the video data to be displayed on the display screens (virtual screens) making up the virtual video presenting system to the video data to be displayed on the display screens (real screens) making up the real video presenting system.

The viewpoint position 124 of the viewer (observer) may be defined as a viewpoint position at the sitting position of normal viewers or may be measured with the use of a three-dimensional position sensor in real time. In the latter case, if the viewer moves from that position, positions of the pixels can be translated on the display screens in correlation with a displacement width between the viewpoint position (original point) of the observer in the virtual video presenting system information and the viewpoint position of the observer in the real video presenting system information to display the wide-field video in accordance with the viewing position of the observer.

Another example of the converting method in the video conversion processing portion 211 will be described.
Discussions will be made here on the case that the wide-field video presenting system example 2 shown in Figs. 4 and 5 is the virtual video presenting system and that the wide-field video presenting system example 6 shown in Figs. 12 and 13 is the real video presenting system. Since the video display apparatuses 109 to 111 are the same apparatuses arranged in the same way in the wide-field video presenting system example 2 shown in Figs. 4 and 5 and the wide-field video presenting system example 6 shown in Figs. 12 and 13, the video data conversion process is unnecessary and the video data may directly be output.

On the other hand, the video data to be presented on the video display apparatus 112 are presented by the lighting apparatus 122 after executing a process of averaging the entire screen. Similarly, the video data to be presented on the video display apparatus 113 are presented by the lighting apparatus 123 after executing a process of averaging the entire screen. By executing such a process, the conversion process can be executed from the video data to be displayed on the display screens (virtual screens) making up the virtual video presenting system to the video data to be displayed on the display screens (real screens) making up the real video presenting system.

Contrary to the above example, discussions will then be made on the case that the wide-field video presenting system example 6 shown in Figs. 12 and 13 is the virtual video presenting system information and that the wide-field video presenting system example 2 shown in Figs. 4 and 5 is the real video presenting system information. Since the video display apparatuses 109 to 111 are the same apparatuses arranged in the same way in Figs. 12 and 13 and Figs. 4 and 5, the conversion process is unnecessary and the video data may directly be output.

On the other hand, the information to be presented by the lighting apparatus 122 can be considered as video data of one pixel and, therefore, the information is presented on the video display apparatus 112 after executing a conversion process of increasing the resolution thereof. That is, this means that the same color is output on the entire screen of the video display apparatus 112. Similarly, the information is presented on the video display apparatus 113 after executing a conversion process of increasing the resolution of the video information to be presented by the lighting apparatus 123. By executing such a process, the conversion process can be executed from the video data to be displayed on the display screens (virtual screens) making up the virtual video presenting system to the video data to be displayed on the display screens (real screens) making up the real video presenting system.

The above embodiment of the present invention is an example and computer graphics can be used as the video information input to the wide-field video data generating portion 202. In possible methods, videos may be processed without compression or a plurality of streams may directly be transmitted without multiplexing. Although the broadcast using airwaves for transmitting/receiving the video data is shown as an example, the same system is applicable to the broadcast through cables and the streaming broadcast through a network.

Although description has been made of the case of applying the wide-field video transmitting/receiving system of the present embodiment to a broadcast system, the system is also applicable to a packaged medium. That is, instead of carrying with airwaves or transmitting through a network, the wide-field video information can once be recorded on a packaged medium and can be reproduced by a reproducing apparatus on the user side. In this case, only a transferring means of the wide-field video information is different and other portions of the system can be implemented with the use of the same means as above.

### (Second Embodiment)

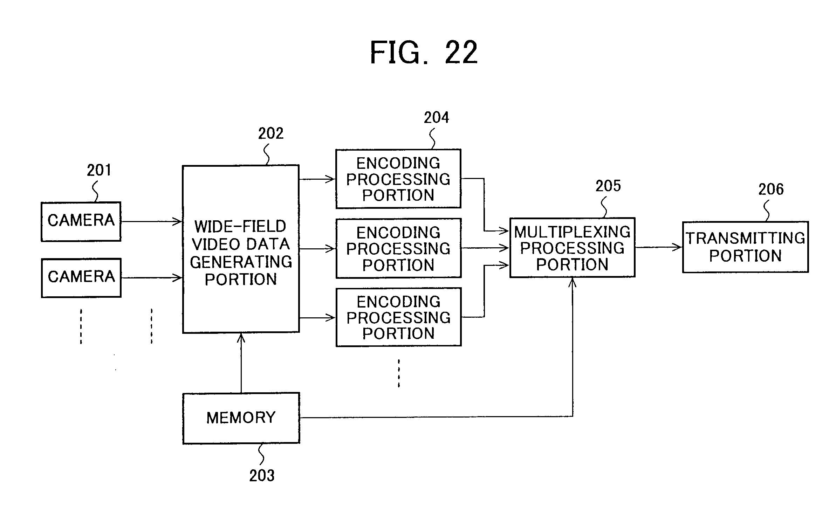

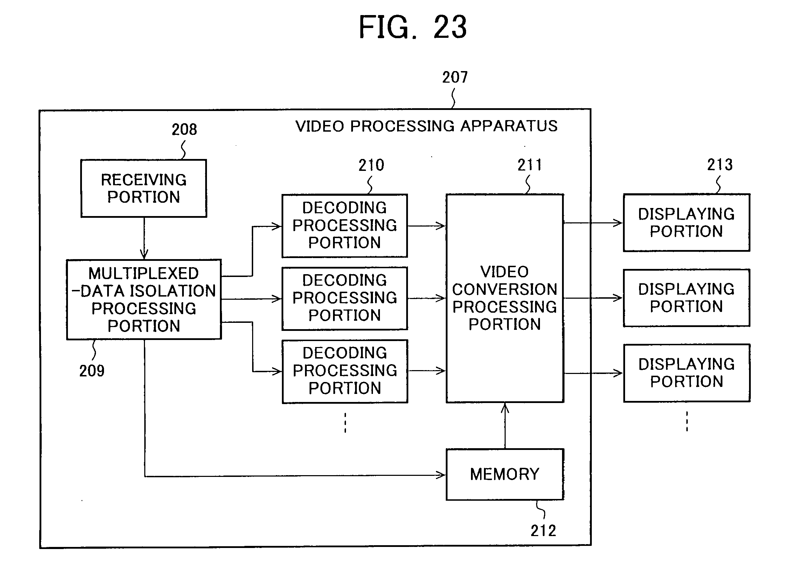

A wide-field video transmitting/receiving system according to a second embodiment of the present invention will be described with reference to Figs. 22 and 23, and the same reference numerals are added to the same portions as the above first embodiment of the present invention and the description thereof will be omitted.

Fig. 22 is a block diagram of a transmitting apparatus in the wide-field video transmitting/receiving system of this embodiment. The transmitting apparatus in the wide-field video transmitting/receiving system of this embodiment has almost the same configuration as the transmitting apparatus of the first embodiment described above with reference to Fig. 14, and a difference is that a process path from the memory 203 to the multiplexing processing portion 205 is added. That is, the virtual video presenting system information recorded on the memory 203 is multiplexed and transmitted with video information by the multiplexing processing portion 205 in this configuration. Since the virtual video presenting system information described in the first embodiment of the present invention can be used without modification, the description thereof will be omitted here.

Fig. 23 is a block diagram of a receiving apparatus in the wide-field video transmitting/receiving system of this embodiment. The receiving apparatus in the wide-field video transmitting/receiving system of this embodiment has almost the same configuration as the receiving apparatus of the first embodiment described above with reference to Fig. 15, and a difference is that a path is added to split and send the virtual video presenting system information with the multiplexed-data split processing portion 209 to the memory 212. That is, the video conversion processing portion 211 uses the virtual video presenting system information and the real video presenting system information to execute the conversion process of the video data. Since the real video presenting system information described in the first embodiment of the present invention can be used without modification, the description thereof will be omitted here. Since the video data conversion process described in the first embodiment of the present invention can be used without modification, the description thereof will be omitted here.

The necessity to keep the virtual video presenting system information is eliminated on the reception side by adding and transmitting the virtual video presenting system information along with the video information, acquiring the virtual video presenting system information on the reception side, and using the virtual video presenting system information and the real video presenting system information preliminarily stored in the memory 121 to execute the conversion process of the video data as above. Even if a plurality of wide-field video data exists and is respectively generated in accordance with different pieces of the virtual video presenting system information, since the pieces of the virtual video presenting system information used for the generation of the respective wide-field video data can be taken out from the multiplexed stream and used for the conversion process, the wide-field video data generated in accordance with whatever virtual video presenting system information can be supported.

The above embodiment of the present invention is an example and computer graphics can be used as the video information input to the wide-field video data generating portion 202. In possible methods, videos may be processed without compression or a plurality of streams may directly be transmitted without multiplexing. Although the broadcast using airwaves for transmitting/receiving the video data is shown as an example, the same system is applicable to the broadcast through cables and the streaming broadcast through a network.

Although description has been made of the case of applying the wide-field video transmitting/receiving system of the present embodiment to a broadcast system, the system is also applicable to a packaged medium. That is, instead of carrying with airwaves or transmitting through a network, the wide-field video information can once be recorded on a packaged medium and can be reproduced by a reproducing apparatus on the user side. In this case, only a transferring means of the wide-field video information is different and other portions of the system can be implemented with the use of the same means as above.

Although the virtual video presenting system information multiplexed with the airwaves is acquired to execute the video conversion process in the described receiving apparatus of this embodiment, this is not a limitation and the receiving apparatus may be configured to acquire the virtual video presenting system information from the outside through a communication network or may be configured to acquire the virtual video presenting system information recorded on a packaged medium. The real video presenting system information may manually be input and set by a user, or an automatic input means described later may be included.

### (Third Embodiment)

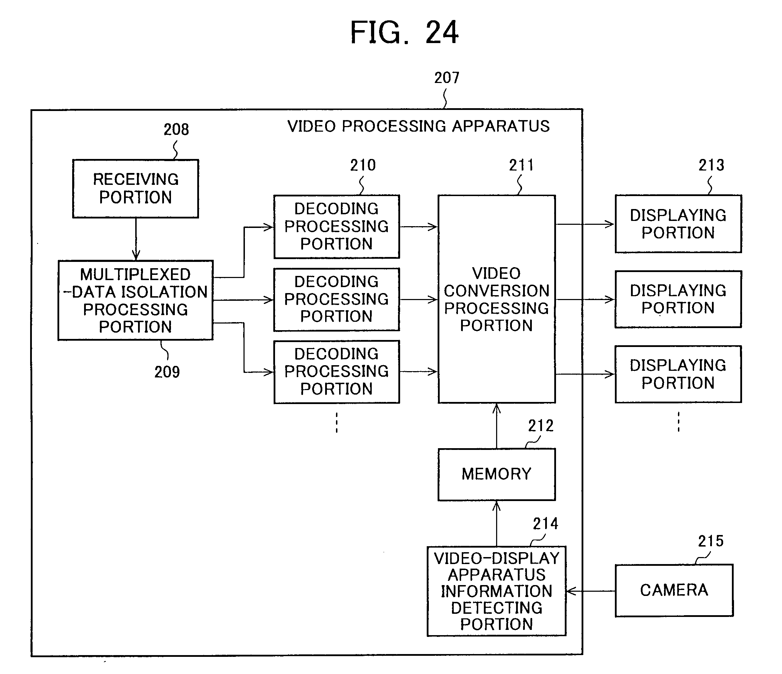

A wide-field video transmitting/receiving system according to a third embodiment of the present invention will be described with reference to Figs. 24 to 26, and the same reference numerals are added to the same portions as the above first and second embodiments of the present invention and the description thereof will be omitted. A transmitting apparatus of this embodiment will not be described since the transmitting apparatus of the first and second embodiments described above with reference to Figs. 14 and 22 is applicable thereto.

Fig. 24 is a block diagram of a receiving apparatus in the wide-field video transmitting/receiving system of this embodiment. Although the receiving apparatus in the wide-field video transmitting/receiving system of this embodiment is almost the same as the receiving apparatus described above with reference to Fig. 15, a video-display apparatus information detecting portion 214 and a camera 215 are added thereto. The video-display apparatus information detecting portion 214 analyzes an image of the displaying portions 213 taken by the camera 215 to acquire the real video presenting system information. Since the video-display apparatus information detecting portion 214 and the camera 215 are included as above, the real video presenting system information can automatically be acquired and compared for differences with the virtual video presenting system information, and the video information can directly be output if both are the same and can be output after being subjected to the conversion process by the video conversion processing portion 211 if both are different.

Therefore, videos can automatically be output in accordance with a user's viewing environment without a user recognizing a type and an arrangement of the displaying portions utilized in the own viewing environment. If the displaying portions are replaced or rearranged, the changes can automatically be recognized to output the videos subjected to the appropriate video conversion process.

An example of a method of acquiring the real video presenting system information with the video-display apparatus information detecting portion 214 and the camera 215 will be described.

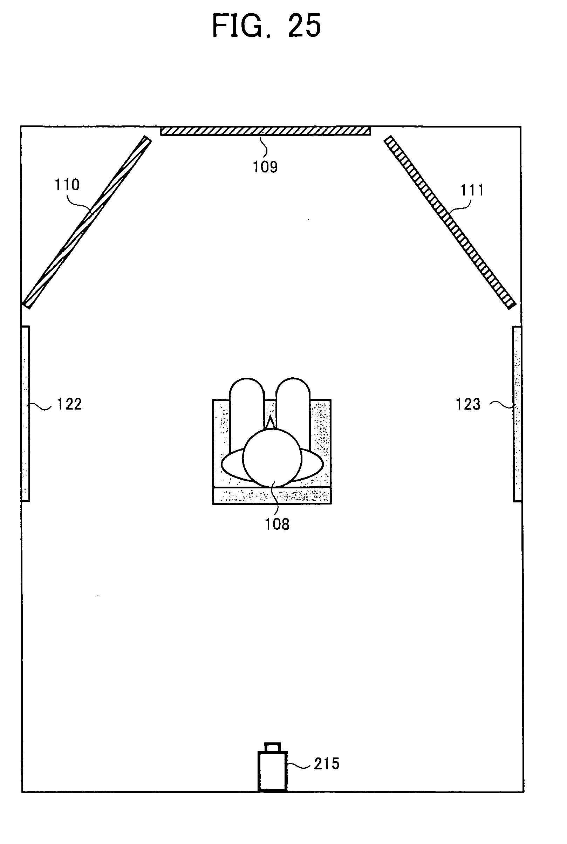

Fig. 25 is a view of a method of acquiring the real video presenting system information. The camera 215 is added to the wide-field video presenting system example 6 described above with reference to Figs. 12 and 13, and the camera 215 is provided at the back of the room such that the displaying portions can be shot. It is assumed that the dimensions of the room and the position of the camera 215 are preliminarily measured. The video-display apparatus information detecting portion 214 calculates the positions of the displaying portions from the image taken by the camera 215. The method thereof will hereinafter be described in detail.

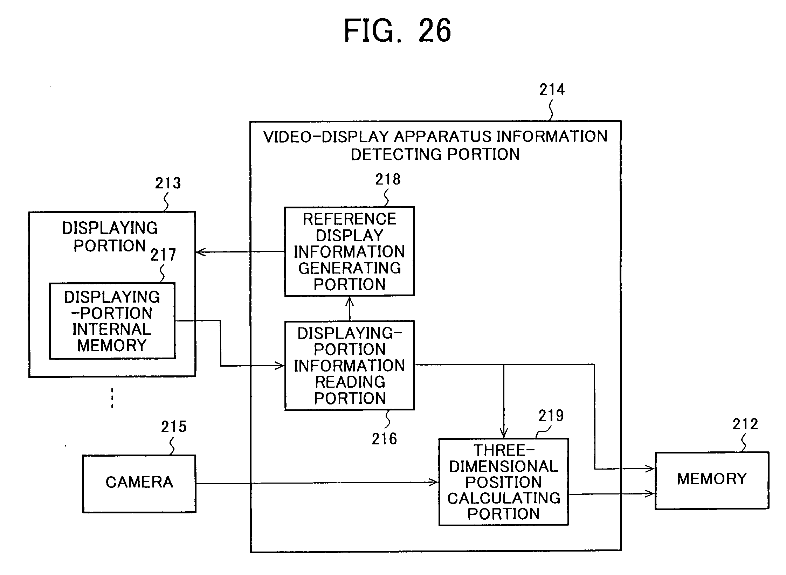

Fig. 26 is a block diagram of the inside and periphery of the video-display apparatus information detecting portion 214. A displaying-portion information reading portion 216 in the video-display apparatus information detecting portion 214 reads information of the displaying portion 213 from a displaying-portion internal memory 217 in the displaying portion 213. The displaying-portion internal memory 217 has information of type (video display apparatus or lighting apparatus), shape, size, resolution of the displaying portion preliminarily stored thereon. The read information is sent to a reference display information generating portion 218, a three-dimensional position calculating portion 219, and the memory 212. The reference display information generating portion 218 sends a measurement pattern image to the displaying portion 213 if the displaying portion 213 is the video display apparatus. The measurement pattern image displayed on the screen of the displaying portion 213 is taken by the camera 215 and sent to the three-dimensional position calculating portion 219. The three-dimensional position calculating portion 219 calculates a relative position of the displaying portion 213 to the camera 215 from the sent information and image.

If the displaying portion 213 is the lighting apparatus, LEDs are attached to four points on the surface of the displaying portion such that the LEDs are turned on by external signals. The position information of the LED on the displaying portion is also recorded on the displaying-portion internal memory 217. The reference display information generating portion 218 sends signals to the displaying portion 213 to turn on the LED if the displaying portion is the lighting apparatus. The light of the LEDs is shot by the camera 215 and sent to the three-dimensional position calculating portion 219. The three-dimensional position calculating portion 219 calculates a relative position of the displaying portion 213 to the camera 215 from the sent information and image. If the one or more displaying portions 213 exist, the above operation is performed for each displaying portion. The calculated position information of the displaying portions is written into the memory 212.

A position calculating method for the displaying portion 213 in the three-dimensional position calculating portion 219 will further be described. For example, in the technology shown in non-patent document 2, a rectangular marker having a known size is shot by a camera, and a three-dimensional relative position relationship between the camera and the marker is obtained from coordinate values of four corners of the marker in the shot image. The three-dimensional position calculating portion 219 can calculate the position of the displaying portion 213 with the use of this technology. If the displaying portion 213 is the image display apparatus, the three-dimensional position calculating portion 219 knows the shape, size, and resolution of the screen from the information read from the displaying-portion internal memory 217 and, therefore, can accurately obtain the actual size and the position on the screen of the measurement pattern image displayed on the displaying portion 213. Alternatively, if the displaying portion 213 is the lighting apparatus, the positions of the LEDs on the displaying portion are known. That is, the measurement pattern is known. Therefore, a three-dimensional relative position relationship between the camera 215 and the displaying portion 213 can be obtained with the use of the above technology. Since the position of the camera 215 is known, calculation can be made for the position in the room where the displaying portion 213 is located.

The position of the camera 215 is not limited to the position shown in Fig. 25 and the camera 215 may be disposed at another position. A plurality of cameras may be used. A method of reading information from the displaying-portion internal memory 217 with the displaying-portion information reading portion 216 is not particularly limited. For example, it is conceivable to perform the method through fixed lines, wirelessly, or through infrared radiation and, of course, other means may be used.

A method may be performed with a means other than the above means that analyzes the image shot by the camera 215. For example, a laser range finder can be used to measure and obtain the shapes and arrangement of the displaying portions. The present invention does not particularly limit the means of acquiring the real video presenting system information.

Since the video-display apparatus information detecting portion 214 can acquire the real video presenting system information to automatically execute the necessary video conversion process as above, the wide-field videos intended by video producers can more accurately be reproduced using the real video presenting system on the viewer side.

Although description has been made of the case of applying the wide-field video transmitting/receiving system of the present embodiment to a broadcast system, the system is also applicable to a packaged medium. That is, instead of carrying with airwaves or transmitting through a network, the wide-field video information can once be recorded on a packaged medium and can be reproduced by a reproducing apparatus on the user side. In this case, only a transferring means of the wide-field video information is different and other portions of the system can be implemented with the use of the same means as above.

Although the real video presenting system information can automatically be set in the described system of this embodiment, this is not a limitation of the present invention and it is needless to say that the present invention may be configured such that a user directly inputs various parameters of the real video presenting system information.

### (Fourth Embodiment)

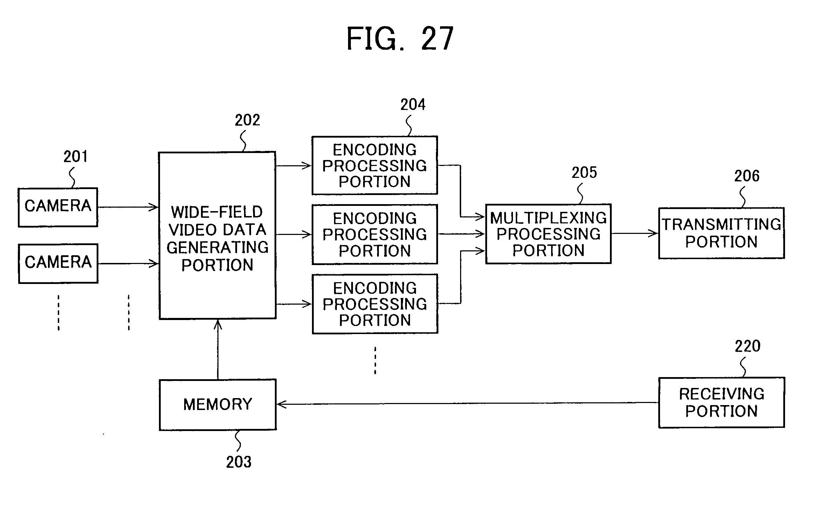

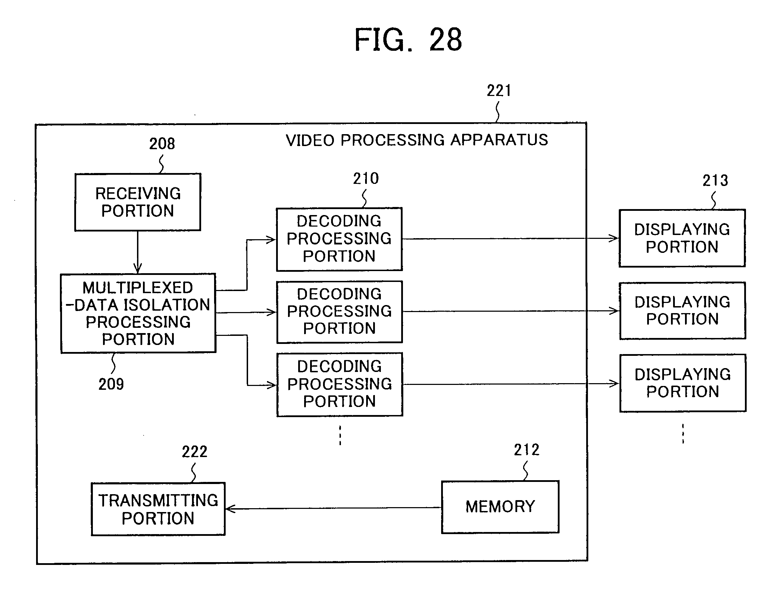

A wide-field video transmitting/receiving system according to a fourth embodiment of the present invention will be described with reference to Figs. 27 and 28, and the same reference numerals are added to the same portions as the above first to third embodiments of the present invention and the description thereof will be omitted. This embodiment is an example of using a means different from the above first to third embodiments when the wide-field video transmitting/receiving system of the present invention is applied to broadcast; the real video presenting system information is transmitted from a receiver side (the viewer side) to a broadcast station side (the video transmission side); and the broadcast station generates the wide-field video data in accordance with the information.

Fig. 27 is a block diagram of a transmitting apparatus in the wide-field video transmitting/receiving system of this embodiment. The transmitting apparatus in the wide-field video transmitting/receiving system of this embodiment is almost the same as the transmitting apparatus of the first embodiment described above with reference to Fig. 14, and a difference is that a receiving portion 220 is included. The receiving portion 220 receives and writes the real video presenting system information sent from a receiver-side apparatus into the memory 203. The wide-field video data generating portion 202 uses this real video presenting system information to generate wide-field videos.

Fig. 28 is a block diagram of a receiving apparatus in the wide-field video transmitting/receiving system of this embodiment. The receiving apparatus in the wide-field video transmitting/receiving system of this embodiment is almost the same as the receiving apparatus of the first embodiment described above with reference to Fig. 15, and differences are that the video conversion processing portion 211 is removed and that a transmitting portion 222 is added. The real video presenting system information is preliminarily recorded on the memory 212. The real video presenting system information is transmitted from the transmitting portion 222 to the broadcast station.

By performing this process, the wide-field video data generated by the broadcast station always becomes video data adapted to the real video presenting system and can directly be output to the displaying portion 213 without conversion on the reception side. Therefore, the video conversion processing portion 211 can be made unnecessary which is needed for the apparatus shown in Fig. 15.

### (Fifth Embodiment)

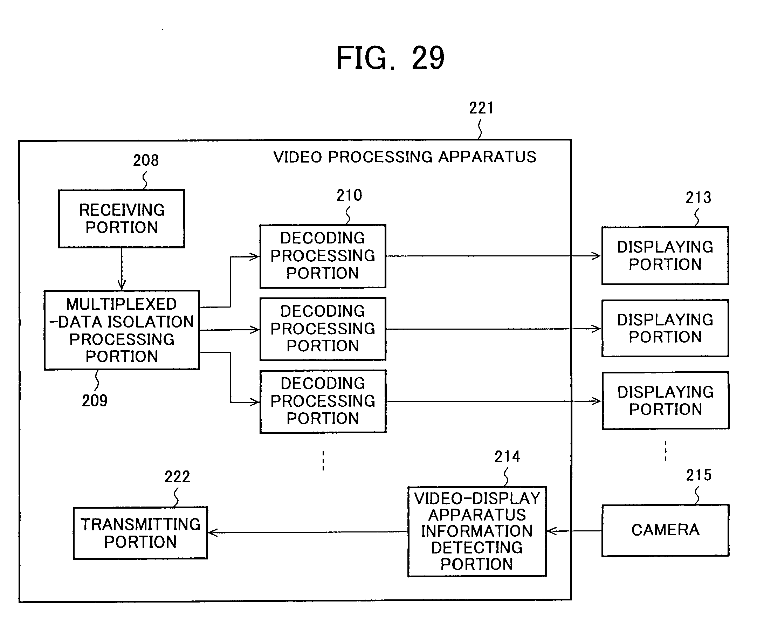

A wide-field video transmitting/receiving system according to a fifth embodiment of the present invention will be described with reference to Fig. 29, and the same reference numerals are added to the same portions as the above first to fourth embodiments of the present invention and the description thereof will be omitted. This embodiment is an example of using a means further different from the above first to fourth embodiments when the wide-field video transmitting/receiving system of the present invention is applied to broadcast. A block diagram of a process of the broadcast station in the wide-field video transmitting/receiving system of this embodiment is the same as the transmitting apparatus of the fourth embodiment shown in Fig. 27 and therefore omitted.

Fig. 29 is a block diagram of a receiving apparatus in the wide-field video transmitting/receiving system of this embodiment. Although the receiving apparatus in the wide-field video transmitting/receiving system of this embodiment is almost the same as the receiving apparatus of the fourth embodiment described above with reference to Fig. 27, the memory 212 is deleted to add the video-display apparatus information detecting portion 214 and the camera 215. The video-display apparatus information detecting portion 214 uses an image taken by the camera 215 to acquire the real video presenting system information. A specific example of this acquiring method is the same as that described above with reference to Figs. 25 and 26 and therefore omitted here.

Since the video-display apparatus information detecting portion 214 is included as above, the real video presenting system information is automatically acquired and sent to the broadcast station from the transmitting portion 222. By executing this process, videos can automatically be output in accordance with the reception environment without a user recognizing a type and an arrangement of the displaying portions utilized in the own reception environment. If the displaying portions are replaced or rearranged, the changes can automatically be recognized to appropriately output the videos.

The above embodiment of the present invention is an example and computer graphics can be used as the video information input to the wide-field video data generating portion 202. In possible methods, videos may be processed without compression or a plurality of streams may directly be transmitted without multiplexing. Although the broadcast using airwaves for transmitting/receiving the video data is shown as an example, the same system is applicable to the broadcast through cables and the streaming broadcast through a network. Since different wide-field video data must respectively be transmitted if a multiplicity of receivers exists, the application to the streaming broadcast is thought to be easier.

For the application of the fourth and fifth embodiments of the wide-field video transmitting/receiving system, some upstream communication line is needed from the receiver to the broadcast station. The upstream communication is easily achieved in the case of a network. Although a cable network may be utilized in the case of cable broadcasting, some upstream line must separately be prepared. Although some upstream line must also separately be prepared in the case of the broadcast through airwaves, the communication line can be any types in the present invention.

As described above in detail, the embodiments of the wide-field video transmitting/receiving system of the present invention have the following technical means.
A wide-field video displaying system generating/displaying wide-field videos includes a video data generating portion that sets information of shapes, sizes, resolutions, arrangements, etc., of respective displaying portions in a virtual video presenting system consisting of one or more displaying portions to generate one or more pieces of video information based on the information, and a real video presenting system consisting of one or more displaying portions for displaying the one or more pieces of the video information.

The shapes, sizes, resolutions, arrangements, etc., of the respective displaying portions in the real video presenting system may be identical to the shapes, sizes, resolutions, arrangements, etc., of the respective displaying portions in the virtual video presenting system.

The shapes, sizes, resolutions, arrangements, etc., of the respective displaying portions in the real video presenting system are different from the shapes, sizes, resolutions, arrangements, etc., of the respective displaying portions in the virtual video presenting system, and a video conversion processing portion is included that executes a conversion process such that the one or more pieces of the video information can be displayed on the respective displaying portions of the real video presenting system.

The information of shapes, sizes, resolutions, arrangements, etc., of the respective displaying portions in the virtual video presenting system may be sent to the real video presenting system along with the one or more pieces of the video information.

A means of detecting the shapes, sizes, resolutions, arrangements, etc., of the respective displaying portions in the real video presenting system may be included along with a means of determining whether the detected shapes, sizes, resolutions, arrangements, etc., are the same as the shapes, sizes, resolutions, arrangements, etc., of the respective displaying portions in the virtual video presenting system, and the one or more pieces of the video information may directly be output to the real video presenting system if the determination results are identical or may be output to the real video presenting system after executing a conversion process if the determination results are not identical.

The one or more pieces of the video information and the information of shapes, sizes, resolutions, arrangements, etc., of the respective displaying portions in the virtual video presenting system may be transmitted through broadcasting.
The one or more pieces of the video information and the information of shapes, sizes, resolutions, arrangements, etc., of the respective displaying portions in the virtual video presenting system may be transmitted through a network.
The one or more pieces of the video information and the information of shapes, sizes, resolutions, arrangements, etc., of the respective displaying portions in the virtual video presenting system may be delivered through a recording medium.

Videos from one or more cameras may be used to generate the one or more pieces of the video information.
Computer-synthesized videos may be used to generate the one or more pieces of the video information.

The respective displaying portions in the virtual video presenting system may be spherical displaying portions.
The respective displaying portions in the virtual video presenting system may be cylindrical displaying portions.
The respective displaying portions in the virtual video presenting system may be a combination of a plurality of flat displaying portions.
The respective displaying portions in the virtual video presenting system may be a combination of the above displaying portions in the virtual video presenting system.
Display apparatuses having a plurality of pixels may be used for either or both the respective displaying portions in the virtual video presenting system and the respective displaying portions in the real video presenting system.
Lighting apparatuses may be used for either or both the respective displaying portions in the virtual video presenting system and the respective displaying portions in the real video presenting system.
The display apparatuses having a plurality of pixels and the lighting apparatuses are mixed and used for either or both the respective displaying portions in the virtual video presenting system and the respective displaying portions in the real video presenting system.

An information transferring means from a video displaying side to a video generating side is included, and the information transferring means may transfer to the video generating side the information of shapes, sizes, resolutions, arrangements, etc., of respective displaying portions in a real video presenting system consisting of one or more displaying portions on the video displaying side to generate one or more pieces of video information on the video generating side in accordance with the information.

A means of detecting the shapes, sizes, resolutions, arrangements, etc., of the respective displaying portions in the real video presenting system may be included to execute a process of sending the information detected by the means to the video generating side.

The one or more pieces of the video information may be transmitted through broadcasting.
The one or more pieces of the video information may be transmitted through a network.
Videos from one or more cameras may be used to generate the one or more pieces of the video information.
Display apparatuses having a plurality of pixels may be used for the respective displaying portions in the real video presenting system.
Lighting apparatuses may be used for the respective displaying portions in the real video presenting system.
The display apparatuses having a plurality of pixels and the lighting apparatuses are mixed and used for the respective displaying portions in the real video presenting system.

The above technical means achieve the following effects.
When the wide-field video displaying system generating/displaying wide-field videos includes a video data generating portion that sets shapes, sizes, resolutions, arrangements, etc., of the respective displaying portions in the virtual video presenting system consisting of one or more certain displaying portions to generate one or more pieces of video information based on the information and the real video presenting system consisting of one or more displaying portions for displaying the one or more pieces of the video information, a frame work for transmission/reception of the wide-field videos can be provided.

When the shapes, sizes, resolutions, arrangements, etc., of the respective displaying portions in the real video presenting system are made identical to the shapes, sizes, resolutions, arrangements, etc., of the respective displaying portions in the virtual video presenting system, the wide-field videos can be reproduced by directly outputting the videos. Even if the shapes, sizes, resolutions, arrangements, etc., of the respective displaying portions in the real video presenting system are different from the shapes, sizes, resolutions, arrangements, etc., of the respective displaying portions in the virtual video presenting system, the wide-field videos can be reproduced by executing the conversion process for the video information.

When the information of shapes, sizes, resolutions, arrangements, etc., of the respective displaying portions in the virtual video presenting system is sent along with the one or more pieces of the video information, a process can be performed for the video information with the use of the sent information even if the receiver side preliminarily does not have the information of shapes, sizes, resolutions, arrangements, etc., of the respective displaying portions in the virtual video presenting system. Even if a plurality of wide-field video data exists and is respectively generated in accordance with shapes, sizes, resolutions, arrangements, etc., of the respective displaying portions in the different virtual video presenting systems, since the information of shapes, sizes, resolutions, arrangements, etc., of the respective displaying portions in the virtual video presenting systems used for the generation of the respective wide-field video data can be taken out to execute the conversion process, the shapes, sizes, resolutions, arrangements, etc., of the respective displaying portions can be supported in any real video presenting systems.

When the means of detecting the shapes, sizes, resolutions, arrangements, etc., of the respective displaying portions in the real video presenting system is included along with a means of determining whether the detected shapes, sizes, resolutions, arrangements, etc., are the same as the shapes, sizes, resolutions, arrangements, etc., of the respective displaying portions in the virtual video presenting system and the one or more pieces of the video information is directly output to the real video presenting system if identical or is output to the real video presenting system after executing the conversion process if not identical, a user does not have to recognize types, shapes, and arrangements of the video display apparatuses utilized in the own video presenting system and videos can automatically be output in accordance with the video display apparatuses. If the video display apparatuses are replaced or rearranged, the replacement or rearrangement can automatically be recognized and processed.

When a system generating/displaying wide-field videos includes the information transferring means from the video displaying side to the video generating side and the information transferring means transfers to the video generating side the information of shapes, sizes, resolutions, arrangements, etc., of the respective displaying portions in the real video presenting system consisting of one or more displaying portions on the video displaying side to generate one or more pieces of video information on the video generating side in accordance with the information, the video data adapted to video displaying environments of users can be acquired from the beginning and the conversion process becomes unnecessary.

When the means of detecting the shapes, sizes, resolutions, arrangements, etc., of the respective displaying portions in the real video presenting system is included to execute a process of sending the information detected by the means to the video generating side, a user does not have to recognize types, shapes, arrangements, etc., of the video display apparatuses utilized in the own video presenting system and videos can automatically be output in accordance with the video display apparatuses. If the video display apparatuses are replaced or rearranged, the replacement or rearrangement can automatically be recognized and processed.

## Claims

1. A video transmitting apparatus transmitting video information generated to be displayed on one or more display screens making up a virtual viewing environment, comprising:
a means that adds and transmits virtual video presenting system information related to positions of pixels included in the display screens making up the virtual viewing environment along with the video information.

2. The video transmitting apparatus as defined in claim 1, wherein the positions of the pixels included in the display screens making up the virtual viewing environment are relative positions to a viewpoint of a viewer in the virtual viewing environment space.

3. The video transmitting apparatus as defined in claim 1 or 2, wherein the virtual video presenting system information includes information about the sizes of the pixels of the display screens making up the virtual viewing environment.

4. The video transmitting apparatus as defined in any one of claims 1 to 3, wherein the virtual video presenting system information includes information representing the shapes of the display screens making up the virtual viewing environment.

5. The video transmitting apparatus as defined in any one of claims 1 to 4, wherein the virtual video presenting system information includes information representing the disposed positions and directions of the display screens making up the virtual viewing environment.

6. The video transmitting apparatus as defined in any one of claims 1 to 5, wherein the virtual video presenting system information includes information representing the sizes and the numbers of pixels of the display screens making up the virtual viewing environment.

7. The video transmitting apparatus as defined in any one of claims 1 to 6, wherein the video information is generated with the use of videos taken by one or more cameras.

8. The video transmitting apparatus as defined in any one of claims 1 to 6, wherein the video information is generated with the use of computer-synthesized videos.

9. The video transmitting apparatus as defined in any one of claims 1 to 8, wherein the video information is transmitted through broadcasting.

10. The video transmitting apparatus as defined in any one of claims 1 to 8, wherein the video information is transmitted through a network.

11. A video transmitting method of transmitting video information generated to be displayed on one or more display screens making up a virtual viewing environment, the method comprising the step of:
adding and transmitting virtual video presenting system information related to positions of pixels included in the display screens making up the virtual viewing environment along with the video information.

12. A video display apparatus receiving video information generated to be displayed on one or more display screens in a virtual viewing environment to display the video information on one or more display screens in a real viewing environment, comprising:
a means that acquires virtual video presenting system information related to positions of pixels included in the display screens in the virtual viewing environment, and
a means that uses the acquired virtual video presenting system information and real video presenting system information related to positions of pixels included in the display screens in the real viewing environment information to generate video information displayed on the pixels included in the display screens in the real viewing environment information from the received video information.

13. The video display apparatus as defined in claim 12, wherein the positions of the pixels included in the display screens making up the virtual viewing environment are relative positions to a viewpoint of a viewer in the virtual viewing environment space.

14. The video display apparatus as defined in claim 12 or 13, wherein the real video presenting system information includes information representing a viewpoint of a viewer in the real viewing environment space.

15. The video display apparatus as defined in any one of claims 12 to 14, wherein the virtual video presenting system information includes information about the sizes of the pixels of the display screens making up the virtual viewing environment.

16. The video display apparatus as defined in claim 15, wherein the real video presenting system information includes information about the sizes of the pixels of the display screens making up the real viewing environment.

17. The video display apparatus as defined in any one of claims 12 to 16, wherein the virtual video presenting system information includes information representing the shapes of the display screens making up the virtual viewing environment.

18. The video display apparatus as defined in claim 17, wherein the real video presenting system information includes information representing the shapes of the display screens making up the real viewing environment.

19. The video display apparatus as defined in any one of claims 12 to 18, wherein the virtual video presenting system information includes information representing the disposed positions and directions of the display screens making up the virtual viewing environment.

20. The video display apparatus as defined in claim 19, wherein the real video presenting system information includes information representing the disposed positions and directions of the display screens making up the real viewing environment.

21. The video display apparatus as defined in any one of claims 12 to 20, wherein the virtual video presenting system information includes information representing the sizes and the numbers of pixels of the display screens making up the virtual viewing environment.

22. The video display apparatus as defined in claim 21, wherein the real video presenting system information includes information representing the sizes and the numbers of pixels of the display screens making up the real viewing environment.

23. A video display method of receiving video information generated to be displayed on one or more display screens in a virtual viewing environment to display the video information on one or more display screens in a real viewing environment, the method comprising the steps of:
acquiring virtual video presenting system information related to positions of pixels included in the display screens in the virtual viewing environment, and
using the acquired virtual video presenting system information and real video presenting system information related to positions of pixels included in the display screens in the real viewing environment information to generate video information displayed on the pixels included in the display screens in the real viewing environment information from the received video information.
